(19) Europäisches Patentamt
European Patent Office
Office européen des brevets

(11) **EP 3 777 168 B1**

(12) **EUROPEAN PATENT SPECIFICATION**

(45) Date of publication and mention
of the grant of the patent:
**05.07.2023 Bulletin 2023/27**

(21) Application number: **19713056.0**

(22) Date of filing: **28.03.2019**

(51) International Patent Classification (IPC):
*H04N 19/436* (2014.01)    *H04N 19/176* (2014.01)
*H04N 19/119* (2014.01)    *H04N 19/172* (2014.01)
*H04N 19/154* (2014.01)    *H04N 19/192* (2014.01)

(52) Cooperative Patent Classification (CPC):
**H04N 19/154; H04N 19/119; H04N 19/172;**
**H04N 19/176; H04N 19/192; H04N 19/436;**
H04N 19/164; H04N 19/179; H04N 19/194;
H04N 19/96

(86) International application number:
**PCT/EP2019/057902**

(87) International publication number:
**WO 2019/185822 (03.10.2019 Gazette 2019/40)**

(54) **ACCELERATING VIDEO ENCODING AND DECODING**

BESCHLEUNIGUNG DER VIDEOKODIERUNG UND -DEKODIERUNG

ACCÉLÉRATION DU CODAGE ET DU DÉCODAGE VIDÉO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.03.2018 EP 18165065**

(43) Date of publication of application:
**17.02.2021 Bulletin 2021/07**

(73) Proprietor: **Fraunhofer-Gesellschaft zur**
**Förderung**
**der angewandten Forschung e.V.**
**80686 München (DE)**

(72) Inventors:
• **GEORGE, Valeri**
**10365 Berlin (DE)**
• **HINZ, Tobias**
**10587 Berlin (DE)**
• **MA, Jackie**
**10587 Berlin (DE)**
• **BRANDENBURG, Jens**
**10587 Berlin (DE)**
• **LEHMANN, Christian**
**10587 Berlin (DE)**
• **WIECKOWSKI, Adam**
**10587 Berlin (DE)**
• **SCHWARZ, Heiko**
**10587 Berlin (DE)**
• **MARPE, Detlev**
**10587 Berlin (DE)**
• **WIEGAND, Thomas**
**10587 Berlin (DE)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**WO-A1-2016/049839       US-A1- 2003 014 264**
**US-A1- 2007 286 288     US-A1- 2014 003 532**

**Description**

The present invention relates to the field of encoding/decoding pictures of a video. Embodiments concern an improvement in encoding/decoding pictures of a video to accelerate encoding/decoding of pictures, such as by performing specific processes in encoding/decoding pictures of a video in parallel.

Video compression algorithms used in encoding pictures of a video become more and more sophisticated and new features gaining higher compression ratios are often directly coupled to additional computational complexity. To compensate this increase in complexity and make applications using advanced video compression tools faster and usable, efforts have to be taken.

Two different approaches are at hand to accelerate a video encoder. One deals with algorithmic optimization, including the pruning of encoding search space. The other utilizes different techniques of programming and execution without altering the algorithm as such.

US 2007/286288 A1 discloses video decoding techniques that utilize parallel processor technology in order to accelerate the decoding processes of image frames. The techniques include defining batches of video blocks to be decoded in parallel with one another. A first batch of video blocks of an image frame is defined, the first batch of video blocks is decoded in a serial manner, a second batch and a third batch of video blocks are defined relative to the first batch of video blocks, and the second and third batches of video blocks are decoded in parallel with one another.

Accordingly, there is a need for approaches that allow for reduction of the time necessary for encoding and/or decoding pictures of a video.

The invention is defined by the appended claims. Other subject-matter described in the following description as embodiments or examples, which do not fall under the scope of the claims do not form part of the invention and are provided for illustrative purposes only.

Embodiments of the present invention provide for a computer program having a program code for performing, when running on a computer, any of the methods of the present invention.

Embodiments are now described in further detail with reference to the accompanying drawings, in which:

Fig. 1      is a schematic view of an example of a picture partitioned into coding blocks and sub-blocks;
Fig. 2      is a schematic view of an example of a video encoder;
Fig. 3      is a schematic view of an example of a video decoder:
Fig. 4      is a schematic view for illustrating how coding blocks of an array of coding blocks may be processed;
Fig. 5      is a schematic view for illustrating how lines of coding blocks in an array of coding blocks may be processed in parallel;
Fig. 6      is a schematic view for illustrating how lines of coding blocks in an array of coding blocks may be processed in parallel while avoiding blocking;
Fig. 7      is a schematic view for illustrating how lines of coding blocks in an array of coding blocks may be processed in parallel to avoid blocking at the beginning of a line;
Fig. 8      is a schematic view for explaining the functionality of a video encoder according to an embodiment;
Fig. 9      is a schematic view of a series of pictures;
Fig. 10      is a schematic view showing pictures encoded by separate threads;
Fig. 11      is a schematic view of a series of pictures comprising I frames as RAP-pictures;
Fig. 12      is a schematic view of an embodiment of a video encoder for encoding subseries of pictures in parallel;
Fig. 13a      is a schematic view showing pictures and sub-series of pictures to explain an embodiment of the video encoder of Fig. 12;
Fig. 13b      is a schematic view showing a data stream and data sub-streams to explain another embodiment of the video encoder of Fig. 12;
Fig. 14      is a schematic view of an embodiment of a video encoder adapted to resume encoding after an interruption;
Fig. 15      is a schematic view of a series of pictures to explain embodiments of the video encoder of Fig. 14;
Fig. 16      is a flow chart of an embodiment of a method of processing lines of an array of encoding blocks in parallel;
Fig. 17      is a flow chart of an embodiment of a method of evaluating split options in parallel;
Fig. 18      is a flow chart of an embodiment of a method of processing sub-series of pictures in a series of pictures in parallel;
Fig. 19      is a flow chart of an embodiment of a method of resuming encoding upon an interruption;
Fig. 20      shows a schematic view of an arbitrarily shaped area; and
Fig. 21      shows schematic views of a square shaped area suitable for explaining an embodiment.

Embodiments of the present disclosure relate to approaches for improving the performance of video encoders and/or video decoders.

Algorithmic Approaches

Algorithmic approaches may be used to improve the performance of video encoders and/or decoders.

A possible approach of video encoder optimization is to prune the encoding search space, i.e. to implement shortcuts, which reduce the number of evaluated coding options. Following the concept of rate-distortion optimized encoding (RDO), different encoding options are evaluated and finally the option with the smallest rate-distortion cost $D + \lambda R$ is chosen. In current state of the art video encoder implementations numerous RDO based decisions have to be performed, which may include further RDO based sub-decisions, leading to a complex and comprehensive decision tree.

Typical RDO based decisions include a mode search, where all modes of a particular partition size, e.g. intra and inter modes, are tested and an evaluation of all available split options is performed. Especially exploring multiple split options will cause an exponential increase of evaluated coding options. If, due to constrained computational resources, an exhaustive search of all these options is not feasible, fast termination rules could be applied to reduce the number of tested options. Fast termination rules try to identify and avoid testing of improbable coding options by deriving early termination rules based on the analysis of the encoded content and/or the results of already tested encoding modes. These termination decisions may affect single encoding modes or groups of modes like intra or inter coding at a particular partition size. Early termination decisions can also lead to pruning split decision trees, if the testing is not likely to contribute coding gains. Such a pruning typically leads to a significant timesaving.

Content Independent Early Termination Rules

Content independent early termination rules may be used. Splitting trees are used in block-based video coding standards, such as HEVC (High Efficiency Video Coding), and the overall coding costs of a block depend on the tree signaling of splits.

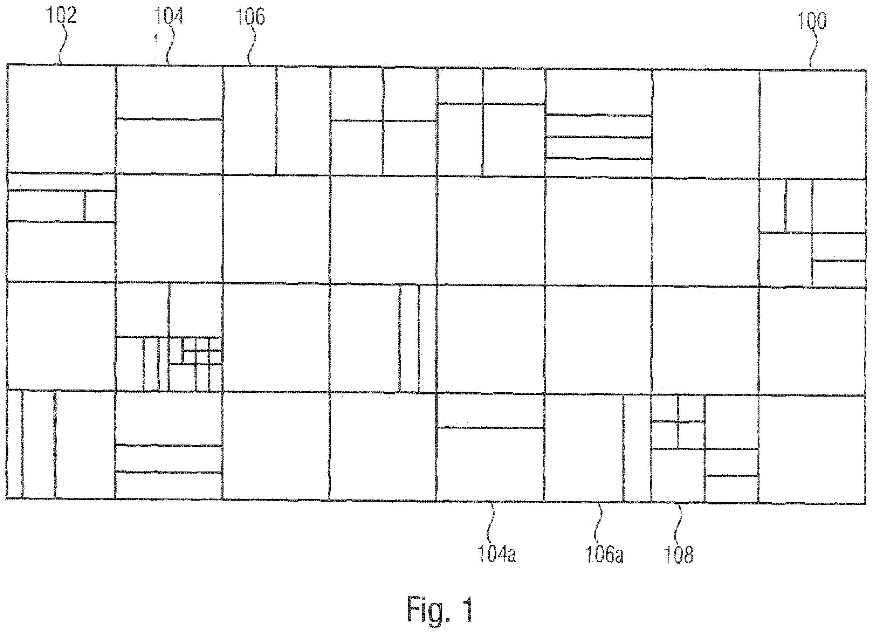

For example, a picture partitioned in coding blocks and sub-blocks is shown in Fig. 1. The picture (or frame or slice) 100 is partitioned in 32 coding blocks. The coding blocks may be coding tree units (CTUs) in HEVC. Different split options may be available for each coding block and may be evaluated during video encoding. Further split options may be available for each sub-block. To be more specific, the video encoder may recursively partition coding blocks into smaller sub-blocks. Fig. 1 shows an example, in which a first coding block 102 is not split, a second coding block 104 is bi-split in the horizontal direction, a third coding block 106 is bi-split in a vertical direction and a third coding block 106 is quad-split. Bi-split means that the respective block or sub-block is split into two sub-blocks of the same or different sizes. An asymmetric horizontal split, in which the coding block is split asymmetrically into two sub-blocks of different sizes is shown at 104a in Fig. 1. An asymmetric vertical split, in which the coding block is asymmetrically split into two sub-blocks of different sizes is shown at 106a in Fig. 1. Quad-split means that the respective block or sub-block is split into four blocks of the same or different sizes. Each sub-block may be further split in sub-blocks. For example, a coding block 108 is quad-split into four sub-blocks, the upper sub-block on the left-hand side is further quad-split into four sub-blocks, and the lower sub-block on the right-hand side is be-split in the horizontal direction. Other split options in addition to the split options cited above may be available.

Splits that are more expensive in signaling may be limited by assigning them separate tree depths whose limits are set a priori. Instead of spanning a full decision tree expensive branches may be pruned off at smaller depths and lead to a faster determination of the searching, if it is expected not to have a large depth, as it is the case for higher temporal layers in the random access configuration of HEVC. These temporal layer dependent depths can also be signalized and then be used on the decoder side to optimize the overall signaling.

Content Dependent Termination Rules

Content dependent termination rules may also be used. In the content dependent case, additional information from the content may be gathered in order to deduce a possibility that a certain split should be tested. In this method, directional gradients may be computed in order to find edges inside the block so that the partitioning can localize the objects of interest. For example, if the sum of differences along the vertical direction is greater than the sum of differences along the horizontal direction, then horizontal information is expected and hence a split in vertical direction is not performed. On the other hand, if horizontal information is expected, then the differences on each side are compared in order to localize the edge information and then a split according to this information is performed. In order not to make too many false implications this rule may only be active for larger blocks as the edges of objects differ more significantly from textured information. A further threshold may be introduced to reduce false implications. A straightforward extension of this may be to consider higher order differences in order to obtain higher accuracy. Methods that are more sophisticated could involve additional transforms, e.g. directional transforms or learned transforms, which give rise to more geometrical information that can be used to deduce a split decision.

Accordingly, embodiments provide a video encoder for encoding pictures of a video into a data stream, the picture being partitioned into an array of coding blocks, wherein the video encoder is configured to decide on a recursive partitioning of coding blocks into smaller sub-blocks by evaluating different encoding split options including a first split option splitting a coding block or sub-block in a first direction, wherein the video encoder is configured to: determine a first similarity of pixels of a block or sub-block along the first direction; and if the first similarity fulfils a predetermined condition, not evaluate the first split option or defer evaluating the first split option to a subsequent decision cycle.

Thus, embodiments permit usage of a content dependent measure or metric, i.e., the similarity between pixels in the respective block or sub-block, to deduce whether a specific split option should be evaluated (tested) or not. Generally, a similarity measure may be used that is in inverse proportion to the similarity, such as the sum of differences or the sum of gradients between pixels in the respective block or sub-block in the respective direction. Generally, similarity means mutual similarity between respective pixels in the block or sub-block. Generally, the similarity may be determined based on the brightness values (Luma) of the pixels. Chroma values of the pixels may also be considered in determining the similarity.

In embodiments, the video encoder is configured to determine the similarity based on the differences of locally neighboring pixels in the block or sub-block.

In embodiments, the predetermined condition may be that the similarity is less than a similarity threshold (or that the similarity measure indicating the similarity is larger than a corresponding threshold).

In embodiments, the video encoder is configured to determine a second similarity of pixels of the block or sub-block along a second direction different from the first direction, wherein the predetermined condition is fulfilled if the first and second similarity comprise a predetermined relationship. In embodiments, the predetermined relationship is fulfilled if the first similarity is less than the second similarity or if the first similarity is less than the second similarity by at least a specific amount. In embodiments, the specific amount may be a fixed amount or may be a specific percentage of a value indicating the first similarity, such as 20%.

In embodiments, the first and second directions are perpendicular to each other. In embodiments, the first direction is the horizontal direction and the second direction is the vertical direction. In other embodiments, the first direction is the vertical direction and the second direction is the horizontal direction. The terms "horizontal" and "vertical" relate to a lower boundary of the picture, such as picture 100 in Fig. 1, wherein horizontal is parallel to the lower boundary and vertical is perpendicular to the lower boundary.

In embodiments, the first split option is an asymmetric horizontal split, wherein the video encoder is configured to not evaluate the first split option or defer evaluating the first split option to a subsequent decision cycle if the similarity along the vertical direction is less than the similarity in the horizontal direction and the similarity in the vertical direction in the halve of the block or sub-block, in which the split would be located, is less than the similarity in the vertical direction in the halve of the block or sub-block, in which the split would not be located. In embodiments, the first split option is an asymmetric vertical split, wherein the video encoder is configured to not evaluate the first split option or defer evaluating the first split option to a subsequent decision cycle if the similarity along the horizontal direction is less than the similarity in the vertical direction and the similarity in the horizontal direction in the halve of the block or sub-block, in which the split would be located, is less than the similarity in the horizontal direction in the halve of the block or sub-block, in which the split would not be located.

In embodiments, the video encoder is configured not to evaluate splits in the first direction if the sum of absolute differences between the pixels along the first direction is greater than the weighted sum of absolute differences between the pixels in the vertical direction.

In embodiments, a directional split is not tested if a similarity measure along the split direction is greater, so to say less similar, than the weighted similarity measure in a perpendicular direction. In embodiments, horizontal splits are not tested if the similarity measure along the horizontal direction are greater than the weighted similarity measure in vertical direction. In embodiments, vertical splits are not tested if the similarity measure along the vertical direction is greater than the normalized similarity measure in horizontal direction. In embodiments, an asymmetric horizontal split is not tested if the similarity metric along the vertical direction is greater than the weighted similarity metric in horizontal direction and the similarity measure in vertical direction in the area that covers the split is greater than the weighted similarity measure in vertical direction of the subblocks that do not cover the split. In embodiments, an asymmetric vertical split is not tested if the similarity metric along the horizontal direction is greater than the weighted similarity measure in vertical direction and the similarity measure in horizontal direction that cover the split is greater than the weighted similarity measure in horizontal directions of the subblocks that do not cover the split. In embodiments, horizontal splits are not tested if the sum of absolute differences along the horizontal direction are greater than the weighted sum of absolute differences in vertical direction. In embodiments, vertical splits are not tested if the sum of absolute differences along the vertical direction are greater than the weighted sum of absolute differences in horizontal direction. In embodiments, an asymmetric horizontal split is not tested if the sum of the gradients along the vertical direction is greater than the weighted sum of gradients in horizontal direction and the sum of vertical gradients that cover the split is greater than the weighted sum of gradients in vertical directions of the subblocks that do not cover the split. In embodiments, an asymmetric vertical split is not tested if the sum of the gradients along the horizontal direction is greater than the weighted sum of gradients in vertical direction and the sum of horizontal gradients that cover the split is greater than the weighted sum of gradients in horizontal directions of the subblocks that do not cover the split. In embodiments, weighting of a similarity or a similarity measure takes place dependent on, but is not limited to, the size of the block the similarity or similarity measure is associated with. In embodiments, weighting may alternatively or additionally depend on the split direction associated with the similarity of similarity measure.

In such embodiments, in which specific split options are not evaluated, generally, an arbitrarily shaped area is divided into n disjoint parts. Then finite differences in m different orientations may be computed, resulting in m * n values. These values can be weighted, for instance, according to the area. Then split modes are neglected, i.e. are not evaluated, if the split direction is within a certain angle range of the gradient direction that is most dominant. All other splits are not neglected, i.e. are evaluated.

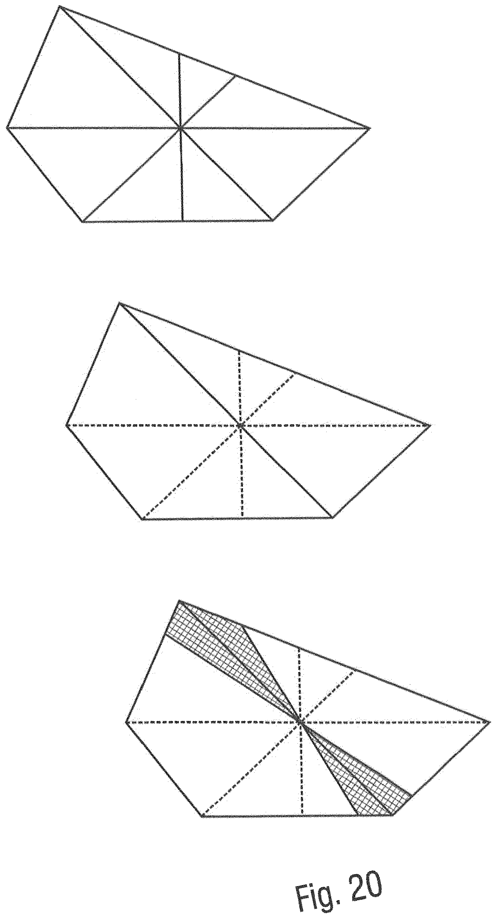

Fig. 20 shows three representations of a pentagon shaped area, wherein solid lines in the upper view visualize finite differences directions. In the center view, the solid line indicates the most dominant direction of the finite differences. In the lower view, the marked area indicates an area of neglected splits. This area depicts the area that is spanned by an angle range around the dominant gradient direction. Splits options within this spanned area are to be excluded and, therefore, not evaluated.

According to particular embodiments, the angle range may be set to 0.

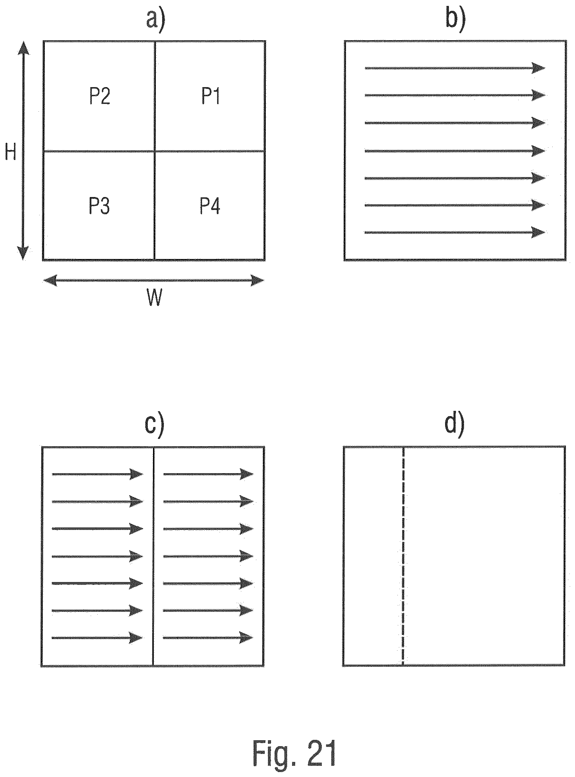

An example of applying content dependent termination rules is now described referring to Fig. 21. As it can be seen in part a) of Fig. 21, a square shaped area is divided into four disjoint parts P1, P2, P3 and P4. To be more specific, a block with a width w and height h is divided into 4 disjoint quadrants or sub-blocks P1, P2, P3 and P4 of size w/2 x h/2, where w and h must be dividable by 2.

Then gradients in horizontal and vertical directions are computed based on first order finite differences. The gradients are then summed up in absolute values for the four quadrants shown in Fig. 21 of the initial block which results in eight values (two gradients of each quadrant for each direction). Using these eight values, early determination criteria may be as follows:

If the sum of the four horizontal gradients is larger than the sum of the four vertical gradients then symmetric and/or asymmetric splits in horizontal direction are not tested.

If the sum of the horizontal gradients in blocks P2 and P3 are greater than the sum of horizontal gradients in P1 and P4, then vertical splits that are located in quadrants P1 and P4 are not tested (evaluated), provided the sum of all horizontal gradients in P1, P2, P3, and P4 are greater than the sum of vertical gradients in P1, P2, P3, and P4. If the sum of the horizontal gradients in blocks P1 and P4 is greater than the sum of horizontal gradients in P2 and P3, then vertical splits that are located in quadrants P2 and P3 are not tested, provided the sum of all horizontal gradients are greater than the sum of vertical gradients.

The same speed up technique may be used in orthogonal directions with the vertical gradients. For the localized gradients the blocks P1 and P2 are grouped and P3 and P4 are grouped, respectively.

For example, in a step 1, four gradients in horizontal direction $h_1, h_2, h_3, h_4$ and four gradients in vertical direction $v_1, v_2, v_3, v_4$ may be computed. In a step 2, the sum of the four gradients in horizontal direction may be calculated and the sum of the gradients in vertical direction may be calculated. If $h_1 + h_2 + h_3 + h_4 > v_1 + v_2 + v_3 + v_4$, horizontal split options are not evaluated. In such case, only vertical spit options would be evaluated, i.e. are in contest. Thereupon, in a step 3, it may be checked whether $h_2 + h_3 < h_1 + h_4$. If so, an asymmetrical left vertical split is forbidden.

Part b) of Fig. 21 shows the dominant block gradient direction of the four blocks P1 to P4, which results from the above calculation in step 2. Part c) of Fig. 21 shows the investigation of the split side in step 3. If the result of step 3 is positive, an asymmetrical left split is forbidden, as shown by the broken line in part d) of Fig. 21.

Examples of how differences or transforms to derive a similarity measure may be calculated are now described. The calculations may be done based on the respective brightness values of the pixels.

Given a block $B$ with width w and height $h$ horizontal differences $h_1$, $h_2$, $h_3$ and $h_4$ may be computed as follows:

$$h_3 = \sum_{i=1}^{w/2} \sum_{j=1}^{h/2} |B(i+1,j) - B(i,j)|$$

$$h_2 = \sum_{i=1}^{w/2} \sum_{j=\frac{h}{2}+1}^{h-1} |B(i+1,j) - B(i,j)|$$

$$h_4 = \sum_{i=\frac{w}{2}+1}^{w-1} \sum_{j=1}^{h/2} | B(i + 1, j) - B(i, j)|$$

$$h_1 = \sum_{i=\frac{w}{2}+1}^{w-1} \sum_{j=\frac{h}{2}+1}^{h-1} | B(i + 1, j) - B(i, j)|$$

Vertical differences may be computed as follows:

$$v_3 = \sum_{i=1}^{w/2} \sum_{j=1}^{h/2} | B(i, j + 1) - B(i, j)|$$

$$v_2 = \sum_{i=1}^{w/2} \sum_{j=\frac{h}{2}+1}^{h-1} | B(i, j + 1) - B(i, j)|$$

$$v_4 = \sum_{i=\frac{w}{2}+1}^{w-1} \sum_{j=1}^{h/2} | B(i, j + 1) - B(i, j)|$$

$$v_1 = \sum_{i=\frac{w}{2}+1}^{w-1} \sum_{j=\frac{h}{2}+1}^{h-1} | B(i, j + 1) - B(i, j)|$$

Higher order differences may also be used to determine the similarity:

$$h_3 = \sum_{i=1}^{w/2} \sum_{j=1}^{h/2} | B(i + 1, j) - B(i, j)|^2$$

$$h_2 = \sum_{i=1}^{w/2} \sum_{j=\frac{h}{2}+1}^{h-1} | B(i + 1, j) - B(i, j)|^2$$

$$h_4 = \sum_{i=\frac{w}{2}+1}^{w-1} \sum_{j=1}^{h/2} | B(i + 1, j) - B(i, j)|^2$$

$$h_1 = \sum_{i=\frac{w}{2}+1}^{w-1} \sum_{j=\frac{h}{2}+1}^{h-1} | B(i + 1, j) - B(i, j)|^2$$

$$v_3 = \sum_{i=1}^{w/2} \sum_{j=1}^{h/2} | B(i, j + 1) - B(i, j)|^2$$

$$v_2 = \sum_{i=1}^{w/2} \sum_{j=\frac{h}{2}+1}^{h-1} |B(i,j+1) - B(i,j)|^2$$

$$v_4 = \sum_{i=\frac{w}{2}+1}^{w-1} \sum_{j=1}^{h/2} |B(i,j+1) - B(i,j)|^2$$

$$v_1 = \sum_{i=\frac{w}{2}+1}^{w-1} \sum_{j=\frac{h}{2}+1}^{h-1} |B(i,j+1) - B(i,j)|^2$$

In other embodiments, transformed errors is using a transformation T, such as DCT (discrete cosine transform) or others, may be used to compute the similarity or the similarity measure:

$$h_3 = \sum_{i=1}^{w/2} \sum_{j=1}^{h/2} |C(i+1,j) - C(i,j)|^2$$

$$h_2 = \sum_{i=1}^{w/2} \sum_{j=\frac{h}{2}+1}^{h-1} |C(i+1,j) - C(i,j)|^2$$

$$h_4 = \sum_{i=\frac{w}{2}+1}^{w-1} \sum_{j=1}^{h/2} |C(i+1,j) - C(i,j)|^2$$

$$h_1 = \sum_{i=\frac{w}{2}+1}^{w-1} \sum_{j=\frac{h}{2}+1}^{h-1} |C(i+1,j) - C(i,j)|^2$$

$$v_3 = \sum_{i=1}^{w/2} \sum_{j=1}^{h/2} |C(i,j+1) - C(i,j)|^2$$

$$v_2 = \sum_{i=1}^{w/2} \sum_{j=\frac{h}{2}+1}^{h-1} |C(i,j+1) - C(i,j)|^2$$

$$v_4 = \sum_{i=\frac{w}{2}+1}^{w-1} \sum_{j=1}^{h/2} |C(i,j+1) - C(i,j)|^2$$

$$v_1 = \sum_{i=\frac{w}{2}+1}^{w-1} \sum_{j=\frac{h}{2}+1}^{h-1} |C(i,j+1) - C(i,j)|^2$$

wherein C is the transformed block of *B* by *T,* that is *C = TB.* In other embodiments nonlinear transforms may be used.

In other embodiments, higher order differences may be used, for example:

$$h_3 = \sum_{i=2}^{w/2} \sum_{j=2}^{h/2} | B(i+1,j) - 2 \cdot B(i,j) + B(i-1,j)|$$

$$h_2 = \sum_{i=2}^{w/2} \sum_{j=\frac{h}{2}+1}^{h-1} | B(i+1,j) - 2 \cdot B(i,j) + B(i-1,j)|$$

$$h_4 = \sum_{i=\frac{w}{2}+1}^{w-1} \sum_{j=2}^{h/2} | B(i+1,j) - 2 \cdot B(i,j) + B(i-1,j)|$$

$$h_1 = \sum_{i=\frac{w}{2}+1}^{w-1} \sum_{j=\frac{h}{2}+1}^{h-1} | B(i+1,j) - 2 \cdot B(i,j) + B(i-1,j)|$$

$$v_3 = \sum_{i=2}^{w/2} \sum_{j=2}^{h/2} | B(i+1,j) - 2 \cdot B(i,j) + B(i-1,j)|$$

$$v_2 = \sum_{i=2}^{w/2} \sum_{j=\frac{h}{2}+1}^{h-1} | B(i+1,j) - 2 \cdot B(i,j) + B(i-1,j)|$$

$$v_4 = \sum_{i=\frac{w}{2}+1}^{w-1} \sum_{j=2}^{h/2} | B(i+1,j) - 2 \cdot B(i,j) + B(i-1,j)|$$

$$v_1 = \sum_{i=\frac{h}{2}+1}^{w-1} \sum_{j=\frac{h}{2}+1}^{h-1} | B(i+1,j) - 2 \cdot B(i,j) + B(i-1,j)|$$

Fast Splitting Screen

In the state of the art hybrid video codecs, like H.265/HEVC, the partitioning search is based on a top-down approach, in which a currently best candidate is compared with best results for single or multiple split options. To obtain the best result for a split option, an exhaustive recursive search has to be done to evaluate all options, inclusive sub-splits, for that split. This causes the partitioning RD-search to create a search domain, the size of which increases exponentially with the number of available depths, and splits at one level. To reduce this search domain, in examples, a shortcut allowing for fast split screening may be introduced. In this method, a step may be introduced before the currently best candidate is compared to the best splitting results. Before the best split result is evaluated for a specific split with a top-down RD-search, a fast coarse search may be performed providing a result for this split. This result may than be compared with the currently best candidate. Only if the coarse result proves to be better or only worse by less than a predefined margin or ratio, a deep top-down RD-search for the best results for a given split is performed. The coarse search might be performed by splitting the current coding block and finding the best result for each sub-partition without further splitting (thus, searching within all possibilities but further splits). If the deep RD-search is performed based on the results of the coarse search, the mode constellations examined during the coarse search should be excluded. The domain searched if a deep RD-search is performed might still be restricted by this or other shortcuts and does not need to a full recursive top-down search.

Thus, embodiments provide a video encoder for encoding pictures of a video into a data stream, the picture being partitioned into an array of coding blocks, wherein the video encoder is configured to recursively partition coding blocks into smaller sub-blocks, wherein the video encoder is configured to: for a particular coding block or sub-block, evaluate all or a subset of non-partitioning encoder modes, probe a specific partitioning encoder mode by evaluating all or a subset of non-partitioning encoder modes for each of the sub-partitions of the specific partitioning encoder mode, but excluding further partitioning of the specific partitioning encoder mode, wherein the specific partitioning encoder mode is excluded from a complete evaluation if the RD-cost of the probed specific partitioning encoder mode exceeds a threshold.

In embodiments, the threshold is set to lowest RD-Cost of the evaluated non-partitioning encoder modes of the particular coding block or sub-block.

In such embodiments, the RD cost of the probed specific partitioning encoder mode may be determined from RD cost associated with all or the subset of non-partitioning encoder modes of each of the sub-partitions of the specific partitioning encoder mode. In embodiments, the RD cost of the probed specific partitioning encoder mode may be the lowest RD cost of these. In embodiments, the RD cost of the probed specific partitioning encoder mode may be determined by determining, for each of the sub-partitions, the lowest RD cost and by summing these lowest RD costs.

Thus, embodiments permit for excluding encoding mode options which turned out to be not appropriate from a full evaluation so that the time required for encoding the pictures may be reduced.

Multi Pass Encoding

In examples, a multi pass encoding may be performed. Under the assumption that the split structure, or encoding decisions are primarily influenced by the local content to be encoded and by the usability of available spatial and temporal prediction candidates, in many cases, some unlikely encoding mode candidates or unlikely split branches can be identified and could be excluded from the mode search.

To simplify the analysis step for a coding block (CTU) with a large number of possible decisions, a generic multi pass approach may be introduced. The encoder may be run in a first pass with a strongly reduced set of encoding modes and/or split branches, whereas in the succeeding runs more and more of these initially imposed restrictions may be removed but other restrictions may be added according to results gathered in the previous runs.

The results gathered from a run (pass) are stored in a buffer individually for each run. The stored information includes but are not limited to the mode cost and which encoding mode was tested. A unique identifier is used to store the information, gathering all the entries that are assigned to the identifier.

During a succeeding run, the mode control can look up, with the current identifier, information about the decisions taken in the preceding run. The mode control decisions in the current pass can be manipulated according to conclusion drawn from results of the preceding passes. This can lead to excluding or restricting one or more encoding modes or split-branches, or groups of these with similar properties, from investigation, or emphasizing promising encoding modes or split branches by relaxing mode specific restrictions.

In an embodiment, the multi-pass approach may be applied to each coding block (CTU) individually. For a decision node, evaluating encoding options for a particular partition, a unique identifier is formed from the position, size and split history of this partition. The mode costs generated in a preceding run are used to classify encoding modes and split-branches, by determining the minimal costs of the node generated in the first run. The minimal cost may be scaled by a parameterizable scaling factor to obtain a threshold. All potential encoder modes and split candidates may be checked prior to testing. If the cost of a mode, equal or similar to the current mode, exceeds the threshold, the particular mode is excluded from the mode search. In this context, the phrase 'similar' is defined as true for modes that share the same category, e.g. split/non-split, intra/inter, intra angular predicted/intra non-angular-predicted.

Thus, embodiments provide a video encoder for encoding pictures of a video into a data stream, the picture being partitioned into an array of coding blocks, wherein the video encoder is configured to recursively partition coding blocks into smaller sub-blocks, wherein the video encoder is configured to: perform a first recursive run, in which a subset of encoder mode options less than all available encoder mode options are evaluated for a particular coding block or sub-block and to store mode decision information associated with each of the sub-set of available encoder mode options; perform a second run, in which encoder mode options are evaluated for the particular block or sub-block, wherein encoder mode options determined to fulfill a specific exclude criterion are excluded from the second run, wherein the video encoder is configured to determine whether an encoder mode option fulfills the specific exclude criterion using the stored mode decision information.

In embodiments, a subset of the stored mode decision information is used, which is restricted to stem from an encoder mode option evaluated in the first run that is a collocated partition of the same partitioning size as the particular block or sub-block in the second run. In embodiments, a subset of the stored mode decision information is used, which is restricted to stem from an encoder mode option evaluated in the first run that is a collocated partition of the same partitioning size and the same split history as the particular block or sub-block in the second run.

In embodiments, the mode decision information is the rate distortion cost, RD cost.

In embodiments, the specific exclude criterion for a mode option is that the mode decision information or a weighted version of the mode decision information associated with the encoder mode option exceeds a threshold. Again, weighting of the mode decision information permits privileging some mode encoding options when compared to others.

In embodiments, the specific exclude criterion for a partitioning mode option is that the partitioning mode option to be tested in the second run has not been evaluated in the first run and that the mode decision information associated with a partitioning mode option having at least one identical property exceeds a threshold. The identical property may, for example, be the same split direction, same number of resulting sub-blocks or whether the option concerns a split at all. Thus, a similar partitioning mode option may be excluded from the second run. For example, a vertical split option partitioning a block or sub-block into two sub-blocks of the same size may be regarded as being similar to a vertical split option partitioning the block or sub-block into two blocks of different sizes. Thus, split options having one, two or more identical properties, but not all, may be regarded as being similar, such as the same split direction and the same number of resulting subblocks.

In a special case where only one split mode is tested in the first run, e.g. a quad-split with no preferred split direction, the identical property might be that the tested partitioning mode splits the block anyhow.

In embodiments, the mode decision information is the RD-cost. As used herein, the term RD-cost also includes RD-cost scaled by a multiparametric function, including a multiplication of the value thereof with a scaling factor as well as an additive offset. For example, the RD-cost may be determined as a scaled value as follows: ScaledValue = Scaling Factor x Value + ScalingOffset. Value is the original RD-cost, Scaling Factor is a scaling factor and ScalingOffset is an additive offset. Scaling the RD cost permits weighting different encoding mode options differently so that some options, such as options concerning larger blocks or sub-blocks may be privileged

In embodiments, the mode decision information is the RD-cost and the threshold is set to the RD-cost of an encoding mode option of the first run having the lowest RD-cost. In embodiments, the mode decision information is the RD-cost and wherein the threshold is set to the RD-cost of a partitioning encoding mode option of the first run having the lowest RD-cost. In embodiments, the mode decision information is the RD-cost and wherein the threshold is set to the RD-cost of a partitioning encoding mode option of the first run having the same split direction, which has the lowest RD-cost. In embodiments, a partitioning mode option that has not been evaluated in the first run is not excluded from the second run. Thus, embodiments allow for excluding encoding mode option in a second or subsequent run in an appropriate manner.

In embodiments, the specific exclude criterion for a non-partitioning mode option is that the non-partitioning mode option to be tested in the second run has not been evaluated in the first run and that the mode decision information associated with a non-partitioning mode option having at least one identical property exceeds a threshold. The corresponding property may concern the kind of the mode, such as whether the mode is an intra predicted mode, whether the mode is a skipped mode, and whether the mode is a motion compensated mode. Thus, encoding mode options having similar properties may be excluded from the second run.

In embodiments, the mode decision information is the RD-cost, and, for a non-partitioning encoding mode option, the threshold is set to the RD-cost of an encoding mode option of the first run having the lowest RD-cost. In embodiments, the mode decision information is the RD-cost, and, for a non-partitioning encoding mode option, the threshold is set to the RD-cost of a non-partitioning mode having the lowest RD-cost. In embodiments, a non-partitioning mode option that has not been evaluated in the first run is not excluded from the second run. Thus, embodiments allow for excluding encoding mode option in a second or subsequent run in an appropriate manner.

The above approaches for excluding encoding mode options from a second run may also be applied to any subsequent run of the recursive execution, wherein a respective subsequent run corresponds to the second run and a respective preceding run corresponds to the first run.

Parallel Processing Approaches

A powerful way of decreasing program execution time is parallel processing. Support for parallel processing is an inherent feature of today's custom of the shelf computer hardware and what's more, these parallel capabilities will further increase with future CPU (central processing unit) generations. Apart from a parallel software solution executed on CPUs, the use of GPUs (graphics processing units) provides additional resources for massive parallel processing.

To benefit from parallel execution, it is advantageous that the program under optimization provides well-structured data sections and a clear program flow. Applying parallel execution capabilities to a sequential program can cause errors due to concurrent data accesses that are usually hard to detect.

Another issue that comes with parallel processing is deterministic behavior. Most programs are required to operate deterministic, so the outcome is identical when the input is the same. When executing tasks in parallel, deterministic behavior is no necessarily required - but desired. For example, a video decoder should always reconstruct the input bit stream in a deterministic way. Opposite, a video encoder might be allowed to operate non-deterministically under the constraint that the resulting bit stream is correct and the performance is not degraded. However, non-deterministic behavior will hamper the program verification and might hide undetected internal program issues.

To preserve deterministic behavior, there are some requirements to operate parallel program sections. Such sections must have no side effects on other sections. If there are dependencies that cannot be neglected, then these dependencies have to be modeled by synchronization of the program sections. However, correct program behavior excludes concurrent data access. If inter-process communication is required, it has to be secured using thread safe techniques.

The present disclosure discusses different parallel processing approaches that can be applied to a video codec. The approaches are discussed for video encoder, but are not limited to it. The proposed different approaches are outlined one by one but are not mutually exclusive and can also be applied in combination, where the speed up rates ideally multiply.

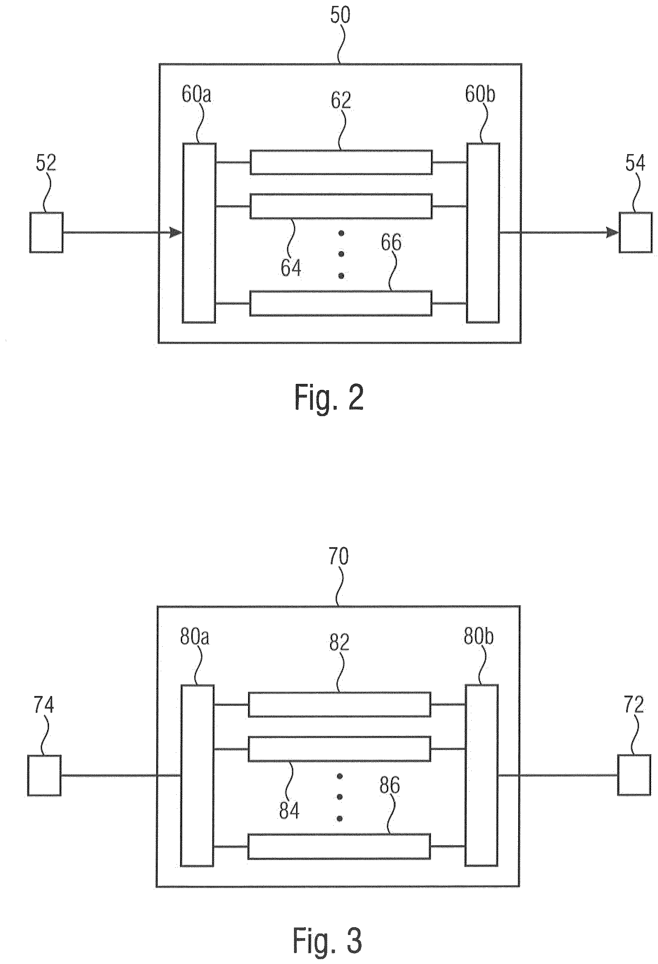

Fig. 2 shows a schematic view of an embodiment of a video encoder 50 configured to perform some of its tasks by parallel processing. Parallel processing means that different tasks are performed by separate sub-units, such as threads, in a timely overlapping manner. The video encoder 50 receives a sequence or series of pictures 52 at an input and outputs an encoded data stream 54 at an output. The video encoder 50 comprises processing means 60a, 60b, 62, 64, 66 to perform any processes necessary to generate the encoded data stream 54. Some of the processing means, such as processing means 62, 64, and 66 are configured to perform tasks in parallel. In embodiments, processing means 62, 64 and 66 may be formed by threads in a computer environment. In other embodiments, processing means 62, 64, 66 may be formed by separate hardware units permitting parallel execution of tasks.

Fig. 3 shows a schematic view of an embodiment of a video decoder 70 configured to perform some of its tasks by parallel processing. The video decoder 70 receives an encoded data stream 74 at an input and outputs a sequence or series of pictures 72 at an output. The video decoder 70 comprises processing means 80a, 80b, 82, 84, 86, which are configured to perform any processes necessary to decode encoded data stream 74 and to generate the series of pictures from the encoded data stream 74. Some of the processing means, such as processing means 82, 84, and 86 are configured to perform tasks in parallel. In embodiments, processing means 82, 84 and 86 may be formed by threads in a computer environment. In other embodiments, processing means 82, 84, 86 may be formed by separate hardware units permitting parallel execution of tasks.

In embodiments, the video encoders and the video decoders described herein may be implemented in hardware using analog and/or digital circuits, in software, through the execution of instructions by one or more general purpose or special-purpose processors, or as a combination of hardware and software. In embodiments, the video encoders and the video decoders may be implemented as a computer system or another processing system. The computer system or processing system may be programmed or configured to provide for the functionality described herein. The computer/processing system may include one or more processors, like a special purpose or a general purpose digital signal processor. The processor(s) may be connected to a communication infrastructure, like a bus or a network. The computer/processing system may include a main memory, e.g., a random access memory (RAM), and a secondary memory, e.g., a hard disk drive and/or a removable storage drive. The secondary memory may allow programs or other instructions to be loaded into the computer/processor system. The computer/processor system may further include a communications interface to allow software and data to be transferred between computer/processor system and external devices. The communication may be in the from electronic, electromagnetic, optical, or other signals capable of being handled by a communications interface. The communication may use a wire or a cable, fiber optics, a phone line, a cellular phone link, an RF link and other communications channels.

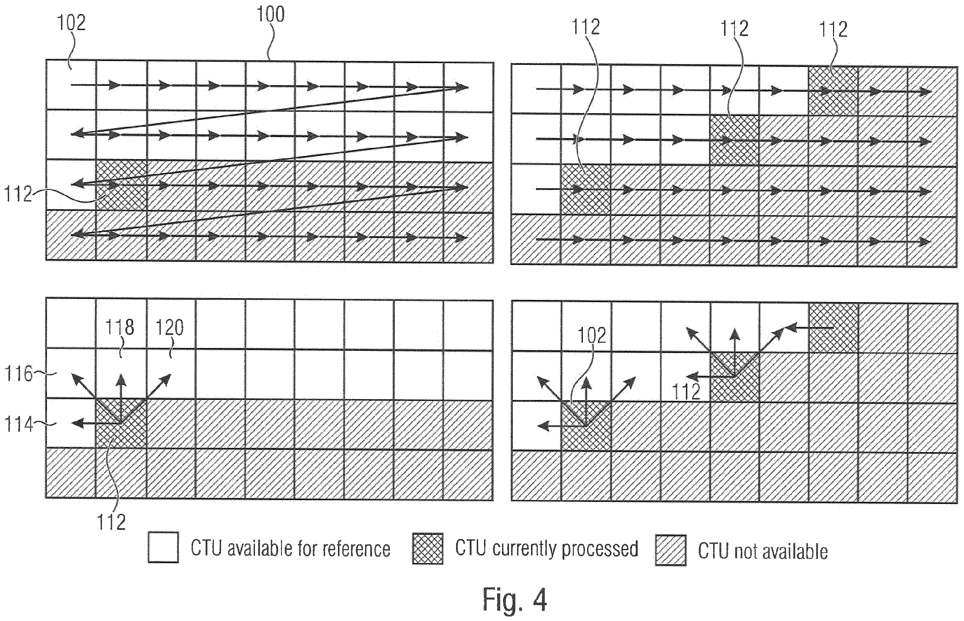

Fig. 4 shows in the upper left part thereof a picture 100 partitioned or subdivided in 36 coding blocks (CTUs) arranged in an array of four rows and nine columns. As used herein, the term "line" may represent a column or a row. As indicated by the arrows, the upper left part of Fig. 4 shows a sequential processing of the coding blocks starting at the coding block in the upper left corner and ending at the coding block in the lower right corner. A coding block 112 is currently processed.

The coding blocks preceding coding block 112 in the processing sequence are available for reference and the coding blocks following coding block 112 in the processing sequence are not available for reference. Coding blocks which are actually processed, coding blocks, which are available for reference, and coding blocks which are not available for reference are depicted differently.

Processing a coding block may require reference to other coding blocks, and such other coding blocks are sometimes herein called reference coding blocks. Reference to reference coding blocks may be required for use as source for spatial prediction or for use as source for context derivation in case of context adaptive entropy coding, for example.

As indicated by arrows in the lower left part of Fig. 4, for example, processing of block 112 may require reference to processing blocks 114, 116, 118 and 120. This is, however merely exemplary and depends on the video codec used.

Wave Front Parallel Encoding

Wave front parallel processing (WPP) is a technique to parallelize video encoder and decoder applications. WPP has been adopted in the current state of the art HEVC standard [1]. If WPP is enabled, specialized features are used. The operational granularity is a CTU. Data dependencies between neighboring CTUs are obvious and undesired data races can be avoided by guaranteeing a minimum CTU offset of two between consecutive CTU-lines as shown by the currently processed CTUs 112 in the upper right part of Fig. 4. The arrows in the lower right part of Fig. 4 show that all necessary CTUs are available for reference. Due to the design of WPP, parallel processing is available for the encoder as well as for the decoder.

New tools incorporated in future standards may introduce additional dependencies and therefore require an increased CTU-offset between consecutive CTU-lines in the WPP case. This can be compensated by either restricting the tool or disabling the tool whenever the outcome might be affected by race conditions. As shown by the arrows in the lower parts of Fig. 4, currently there are only temporal dependencies to previously processed pictures and spatial dependencies of CTU's to the direct predecessor to the left of the current CTU and to the adjacent neighbors of the CTU line above. Given the fixed required CTU-offset of two, a synchronization mechanism is required to keep the distance of a minimum required CTU-offset between consecutive CTU-lines, to ensure correct behavior.

Different approaches may be used for the given synchronization problem and are outlined to handle CTU-line parallel encoding.

Lockstep Execution

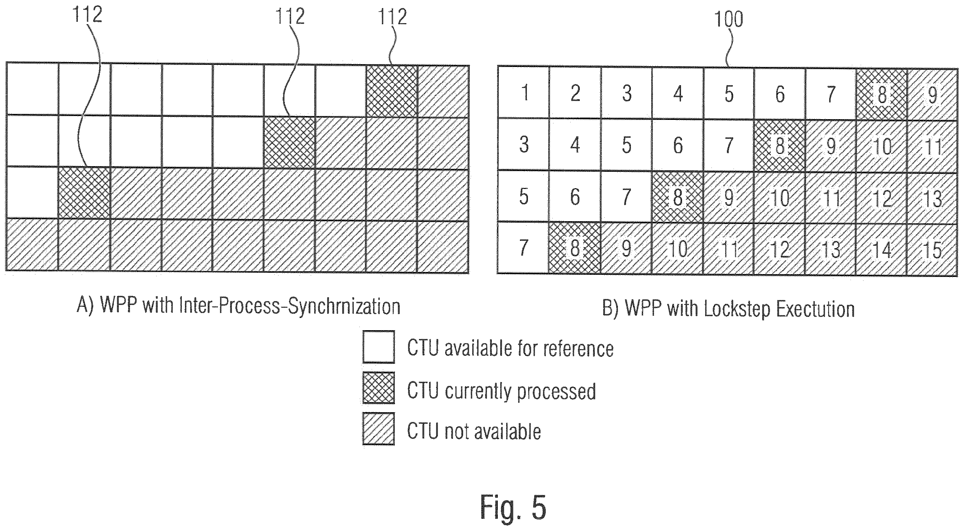

A first approach is based on a so-called lockstep execution and is shown in the right part of Fig. 5. The processing of the picture 100 is divided into execution slots. For each execution slot, CTUs are gathered that can be processed in parallel without interference. The execution slots are indicated by numbers 1 to 15 in Fig. 5. An execution slot ends when all CTUs of this particular slot have been processed. Then the next execution slot is processed. This continues until all execution slots are done. The CTUs assigned to an execution slot might be processed in full parallel, semi parallel or sequentially in any order. One of the advantages is that this approach requires no explicit synchronization and that it can be implemented easily with high-level parallel programming approaches like OpenMP. Furthermore, it is a convenient approach for GPU-solutions. Especially the full-parallel approach is feasible here, because GPU-solutions can usually allocate more parallel tasks than CPU-solutions can do. Each task may be performed by a thread. If the number of tasks that can operate in parallel is limited, the CTUs of the execution slot can be processed semi-parallel. When an execution slot starts, all tasks get a CTU for processing. When one of the tasks has finished its current CTU, then as long as there are unprocessed CTU of the same execution slot, it resumes processing with one of the unprocessed CTUs. With respect to data dependencies, the processing starts with the upper left CTU only in the first execution slot, this is followed by the second CTU of the first line only in the second execution slot. In the next execution slot, the third CTU of the first line and the first CTU of the second line can be processed in parallel. And so forth. This is shown by the numbering of the execution slots in the right part of Fig. 5.

Dynamic Approach with local Synchronization Objects

A second approach for synchronizing parallel processed coding blocks (CTUs) is a dynamic approach with local synchronization objects, i.e., using explicit synchronization. Each CTU-line is processed by one task. Each task may be performed by a thread. The left hand part of Fig. 5 shows such a scenario, in which three CTU lines are processed by three tasks (threads) and, therefore, three CTUs 112 are processed.

In this variant, two or more tasks are running independently, but are synchronized to prevent overtaking of the superior task by the dependent one, ensuring the required minimum CTU-offset. For synchronization, synchronization objects, such as flags, are used. For synchronization, either a single synchronization object is shared between the tasks and each CTU or each CTU-line is assigned to shared synchronization object.

Before processing a CTU, the task has to test whether all dependencies are resolved. Therefor it accesses a thread safe variable. If all dependencies are resolved then the task can process the CTU, otherwise, if any of the required dependencies remains unresolved, the task has to suspend processing until all resources are available. After processing a CTU, the corresponding synchronization object is modified to indicate that the CTU has been processed. Under the assumption that each CTU-line is processed by one task, and they only depend on the previous CTU of the same CTU-line, with an always solve reference, and on CTUs that belong to the CTU-line above, then one task just has to check whether the CTU according to the fixed CTU-offset of the CTU-line above has been processed already.

For the synchronization, it is not relevant how the state of the last processed CTU is derived. The information can be stored in a thread safe variable, that is only shared between the two tasks, or it could be stored for each CTU-line and, thus, a task aware what CTU-line is currently processed can directly access the information. Alternatively, the information could be stored in a thread safe variable assigned to each CTU, thus a thread aware of its CTU position could directly access the rightmost reference CTU-variable to get the information. However, the task processing the first CTU-line is not affected by synchronization, and does not have to wait for unresolved references. When the second task is started it checks the synchronization object and if this is not blocked the task can process the next CTU. When the CTU is done, the task modifies the corresponding synchronization object to indicate the CTU is done, before checking the next CTUs synchronization object. Once a task is blocked due to an unresolved reference indicated by a blocked synchronization object, it has to wait until the reference is solved and marked available by unblocking the synchronization object. The benefit of this method is a higher throughput due to more independent processing with minimal synchronization overhead. This approach also benefits from data locality.

Embodiments of the present invention provide an approach to improve performance when processing CTU lines in parallel by different threads (tasks). In particular, in case task resources and, therefore, threads, are limited, the throughput of CTUs can be increased according to embodiments of the invention. To be more specific, in environments as explained above with respect to Fig. 5, in case of a specific event, processing of coding blocks (CTUs) by a second thread in a second line of CTUs may be interrupted and CTUs in a third line may be processed.

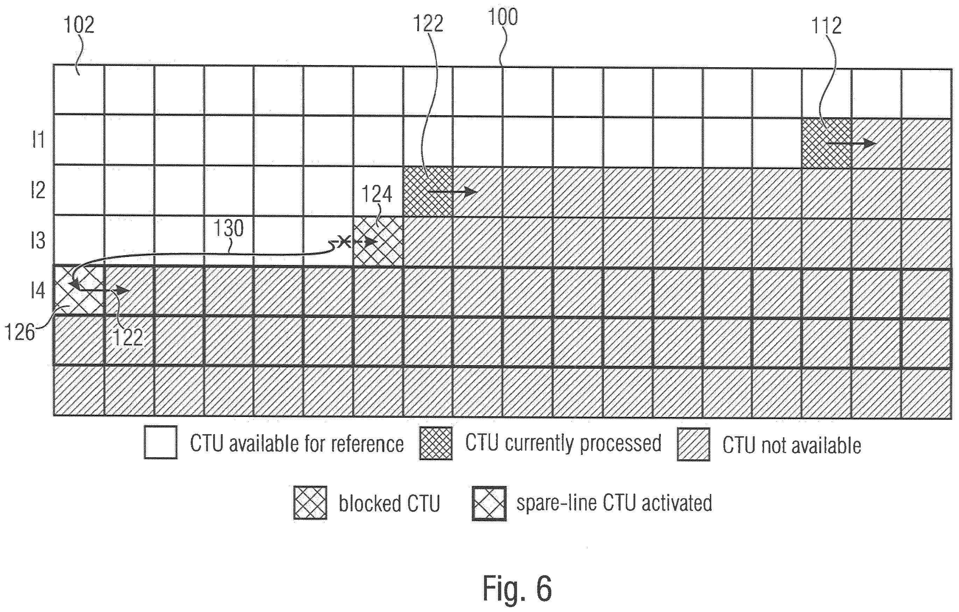

Fig. 6 shows a scenario, in which a picture 100 is partitioned in CTUs102, wherein three CTU lines l1, l2 and l3 are processed by three separate threads in parallel. Line l1 is processed by a first thread, line l2 is processed by a second thread and line l3 is processed by a third thread. Again, different states of CTUs are depicted differently.

CTUs 112, 122 are currently processed by the first and second thread. The third thread processing CTU line l3 is blocked since the second thread has not yet finished processing CTU 122. Thus, the third thread may not proceed with processing CTU 124 but has to wait until the second thread has finished processing of CTU 122 (since CTU 122 is a reference CTU for CTU 124). Thus, the third thread is idle.

In order to avoid such idle times, in embodiments to the invention, the third thread interrupts processing line l3 and jumps to the next line not yet or not currently processed by another thread and starts processing a CTU in this line, which is available for processing (since all reference CTUs for this CTU have already been processed). In Fig. 6 this is the first CTU 126 in line l4, i.e. the line following line l3. This is indicated by the arrow 130 in Fig. 6.

Upon having processed CTU 126, the third thread may check whether CTU 124 is still blocked and may jump back to CTU 124 if it is no longer blocked. Otherwise, it may proceed with processing the next CTU in line l4 as indicated by an arrow 132 in Fig. 6. In embodiments, the third thread may proceed with processing CTUs in line l4 until it reaches a CTU in this line, which is blocked or until processing of CTU 124 in line l3 is no longer blocked. In embodiments, another thread may proceed with processing line l3 after the second thread jumped to line l4.

A master thread may be provided, which may control the allocation of tasks to the threads. The master thread may control how the switching of threads to another line is to be performed upon the specific event. The master thread may be configured to control the allocation of tasks so as to keep idle times as low as possible.

Thus, in embodiments of invention, the processing schemes explained above with referring to Fig. 5 may be extended to further increase the overall throughput. As described, the proposed operation scheme may allocate one or more extra tasks assigned to CTU-lines directly succeeding the CTU-line block of the major tasks as spare line. The extra tasks remain inactive unless one of the major tasks is blocked by the synchronization process. If the major task is blocked, the blocked thread is suspended and one of the inactive tasks of the spare extra line is activated.

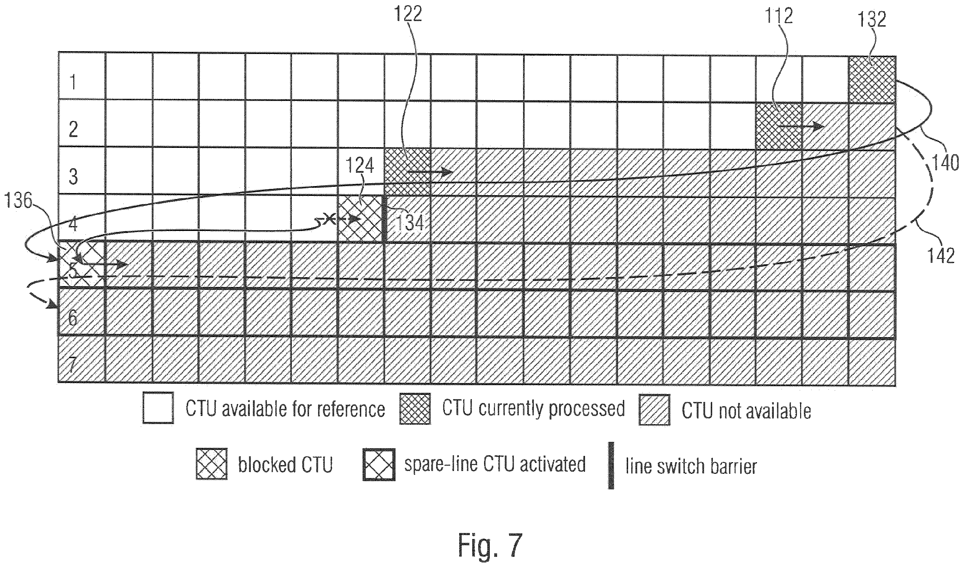

In embodiments of the invention, the specific event upon which processing one CTU line is interrupted may be that processing this line reaches a specific CTU. Fig. 7 shows such a situation. In Fig. 7, a CTU 132 is processed by a first thread, CTU 112 is processed by a second thread and CTU 122 is processed by a third thread. In Fig. 7, the CTU lines are numbered 1 to 7. A fourth thread processes the fourth line. The fourth line is the last line that is processed by any of the threads. In Fig. 7, the specific CTU is CTU 124. This CTU represents a line switch barrier 134. Upon having processed CTU 124, the fourth thread reaches the line switch barrier 134, interrupts processing the fourth line and jumps to the first CTU 136 of the fifth line to process CTU 136. Upon having processed CTU 136 or CTU 136 and the CTU following CTU 136, the fourth thread may jump back to the fourth line to proceed with processing the CTU following the switch line barrier 134. In Fig. 7, the fourth thread finished processing CTU 136 in the fifth line before the first thread finished processing CTU 132. Then, the first thread finishes processing CTU 132 and may jump to the first CTU in the fifth line, which the fourth thread has not yet processed. This is indicated in Fig. 7 by arrow 140. Thereupon, the second thread may finish processing the second line and may jump to the sixth line as indicated by arrow 142 in Fig. 7. In case the CTUs are grouped into tiles, the line switch barrier will be different from a tile border.

While there is an offset between jumps 140 and 142, processing a first CTU in a line may be more time consuming than processing subsequent CTUs. Thus, if the first thread would have to process the first CTU in the fifth line, the second thread might be blocked from processing the first CTU in the sixth line due to the fact that the first thread did not yet finish processing the first CTU in the fifth line. Thus, the second thread would be idle. This can be avoided by embodiments of the invention since the first thread has been processed in advance by the fourth thread.

Thus, in embodiments of the invention, the tasks that operate on the last regular CTU-line are interrupted at a specific position if the succeeding CTU line has not been started. The computational resources of the interrupted tasks are handed over to the task of the line below the stopped one. This helps to prevent potential blocking of tasks at the beginning of the next CTU-lines.

The processing schemes described referring to Fig. 6 and Fig. 7 are applicable to encoders as well as to decoders. Accordingly, the video encoder shown in Fig. 2 and the video decoder shown in Fig. 3 may be configured provide such processing schemes.

Within CTU Parallel Encoding

Embodiments relate to approaches using parallel processing within coding blocks, such as CTUs. Besides parallel encoding of CTUs as used with wave front parallel processing, parallel encoding within a CTU may also be a promising option for accelerating the overall execution time. Given a certain partition size several encoding modes are evaluated before a final mode decision is taken. Because there are no data dependencies between these encoding modes, they can be tested in parallel. Without restriction, this approach can be extended to testing of available split modes. Current state of the art [3] implementations of future video codes utilize more than one split mode. With further enhancements, which introduce even more split options [5], [6] the potential of parallelization is increasing.

The main advantage of split parallelization versus mode parallelization is the longer execution time of splits when compared to other modes. The more splits are available, the more this statement becomes true. This is caused by the exponential growth of the search space with respect to the number of splits, while the search space for non-split modes is unchanged. Also, longer execution times cause fewer synchronization points reducing multi-threading overhead.

In [3], [5], and [6] partitioning methods are described which allow to recursively partition a coding block or macro-block (CTU) into smaller block for further encoding. Other than in the current standard H.265/HEVC, all of these methods allow a multitude of splits instead of only allowing the quad-split. This flexible partitioning enables optimal representation of spatial and temporal dependencies in further coding. This multitude of splits can process in parallel. In a possible implementation, a thread pool and separate encoding stacks are prepared for each thread. Encoding may start as usual. After starting encoding of a CTU, different modes will be probed at each partitioning level, some of the further splits. At well-defined parallelization points, instead of testing all modes sequentially, the modes will be grouped into disjunct sub-sets. The sub-sets will then be probed in parallel, producing a best-mode for each of the sub-sets. All modes from a specific sub-set need to be tested independently of any modes from different sub-sets. Dependencies for modes within a sub-set are allowed. The sub-sets can be executed on an arbitrary number of threads, at least one. Increasing the number of threads beyond the number of subsets will not provide further improvements. After all of the sub-sets have been executed, best mode has to be chosen from the best candidates calculated for each sub-set. After the parallel execution of mode testing at a specific well defined parallelization point, sequential execution is resumed. When parallelizing splits at a parallelization point, all non-split modes can be combined to a separate sub-set and executed in parallel as any other sub-set. Nesting of parallelization points can be applied, as long as not all threads of the thread-pool are busy. The disjunct sub-sets can be different, depending on mode availability. Ensuring the parallelization points as well as modes subdivision into sub-sets are well-defined and independent of the number of available threads may ensure the encoder to always produce the same results.

Exemplary subsets for [3] may be: all non-split modes, QT-split, horizontal BT-split, and vertical BT-split. All elements are subjected to availability within the specific block.

Exemplary subsets for [5] may be: all non-split modes, QT-split, horizontal MTT-bi-split, vertical MTT-bi-split, horizontal MTT-tri-split, vertical MTT-tri-split. All elements are subjected to availability within the specific block. MTT stands for multi-type-tree. In addition to quad-tree and binary-tree, triple-tree partitioning may be employed in multi-type-tree structures. In a Quad-Tree-Binary-Tree structure, a CTU is firstly partitioned by a quad-tree structure and the quad-tree leaf nodes are further partitioned by a binary-tree structure. In a multi-type tree structure, horizontal and vertical center-side triple-trees are introduced, in which a block or sub-block is partitioned into three sub-blocks, wherein the size of the center sub-block may be twice the size of the side sub-blocks.

Other exemplary subsets if only split ratios ½, ¼, ¾, 1/3, 2/3 are allowed may be: all non-split modes, perpendicular ½ split, parallel ½ split, perpendicular and parallel ¼ split, perpendicular and parallel ¾ split, perpendicular and parallel 1/3 split, perpendicular and parallel 2/3 split. All elements are subjected to availability within the specific block.

When considering parallelization within coding blocks, load balancing should be a concern. For successful parallelization all threads running in parallel should last similarly long. As the overall execution time is defined by the slowest thread, if other threads are significantly faster, resources are wasted. To accommodate this obstacle, load-balancing techniques may be used. In the state of the art [3] implementation of a future video codec, two tree types are intermixed. At the CTU-level a quad-tree (QT) is started. In a quad-tree, a square block can be recursively split into four smaller squares. In [3], the quad-tree has no restrictions as long as further splitting results in valid codable blocks of not smaller than a pre-defined size. At each leaf of the quad-tree, a binary tree (BT) is started. In a BT, a rectangular block is recursively split into two rectangular sub-blocks of equal size. The split can be performed along the vertical or horizontal axis. In [3], a BT is restricted to a specific depth, thus limiting the search space. The leafs of a BT are coded without further subdivision. As BT is embedded into QT, BT extends the search space of QT, creating a much larger space than this of BT only. For this reason, QT splits usually take longer to test than BT splits. To take this fact into account during load balancing of split-parallelization, the parallelization is not applied at the CTU level, as the QT search space is much larger that BT search space. Optimally, the parallelization should be applied when the search space of the QT split roughly equals the search spaces of BT-splits. The same applies for [5], if the QT is balanced against the multi-type-tree rather than the BT. For an implementation of [5], it was found that parallelization at block size $16 \times 16$ is optimal.

In other embodiments, the parallelization switch point can be adaptively set across frames within the same T-layer, frames with the same QP (quantization parameter), all frames in the coding order. If a BT split or MTT split is started in a non-parallel segment, it is assumed that all further BT-splits (or MTT-splits) have similarly large search spaces. For this reason, those splits can be executed in parallel.

Thus, embodiments provide for parallelization within coding blocks, such as CTUs, wherein such parallelization takes place when a specific criterion is met. As described above, the criterion may be that the block has a specific block size or less, wherein the specific block size is less than the coding block size. Another criterion may be that a quad split is not available for the block or sub-block.

Thus, according to embodiments, a video encoder, such as the encoder shown in Fig. 2, is configured to encode pictures of a video into a data stream. The picture is partitioned into an array of coding blocks, such as CTUs. As explained above, the video encoder is configured to recursively partition coding blocks into smaller sub-blocks. In doing so, different split-options are evaluated for each block or sub-block. Evaluating a split-option may include testing the split option to obtain a rate-distortion cost in a usual manner. Testing may include encoding and decoding using the respective option in order to achieve the rate-distortion cost. Generally, the option with the smallest rate-distortion cost may be selected.

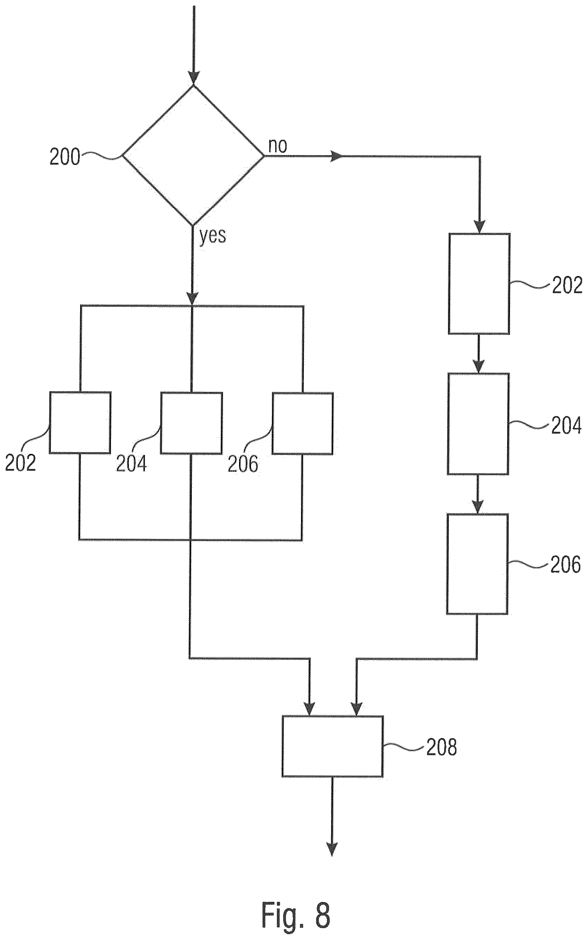

As shown in Fig. 8, the process performed by the video encoder for a specific block or sub-block reaches a decision point 200. At the decision point 200 it is determined whether the block or sub-block meets the specific criterion. If the specific criterion is not met, the different split options 202, 204 and 206 are evaluated sequentially one after the other by a single thread. If the specific criterion is met, the different split options 202, 204, 206, are evaluated in parallel by separate threads. Upon receiving the results of the evaluations at 208, the processing may proceed in a serial manner. As explained above, a separate thread may be used for each split option. However, from a load balancing point of view, grouping split options into sets or sub-sets and using a thread for each set or sub-set may be beneficial.

Analogue to different split options, current state of the art of future video codecs [3] allows many non-split modes to be applied to a leaf of the partitioning tree. Sophisticated prediction and transformation modes increase the complexity. Thus, in embodiments, those modes may be executed in parallel. In addition or as an alternative, embodiments may create disjunct sub-sets of all non-split modes within a specific block, which are than executed in parallel, similar to split parallelization. After the parallelization has finished and a best mode for non-split has been established, split-modes can be executed sequentially. Alternatively, testing of split modes can be executed in parallel as described above, without creating a designated sub-set for non-split modes (which already were tested for this specific block). In [3], the tested non-split modes produce many interdependencies, which need to be taken into account when defining the sub-sets. For example, some modes might be only refined results of other modes - for those modes it may be crucial that they are executed within the same sub-set (as the can be no dependencies between the sub-sets). Exemplary sub-sets for non-splits modes for [3] may be: Intra-modes, Merge- and Skip-Modes (all Inter-Modes for which no MVD (multivalued dependency) will be signaled), Motion-Search modes (non-merge) (all Inter-Modes for which a MVD will be signaled). All modes are subjected to availability constraints for a particular block.


Picture Parallel Encoding

In addition to parallelization in processing coding blocks, such as CTUs, and within coding blocks, pictures may be encoded in parallel.

One of the commonly used configurations in video coding is a "random access" coding mode, where a hierarchical picture formation is packed into a group of pictures (GOP). The structural delay, caused by some dependencies between pictures, allows picture parallel processing inside GOP as well as between GOPs.

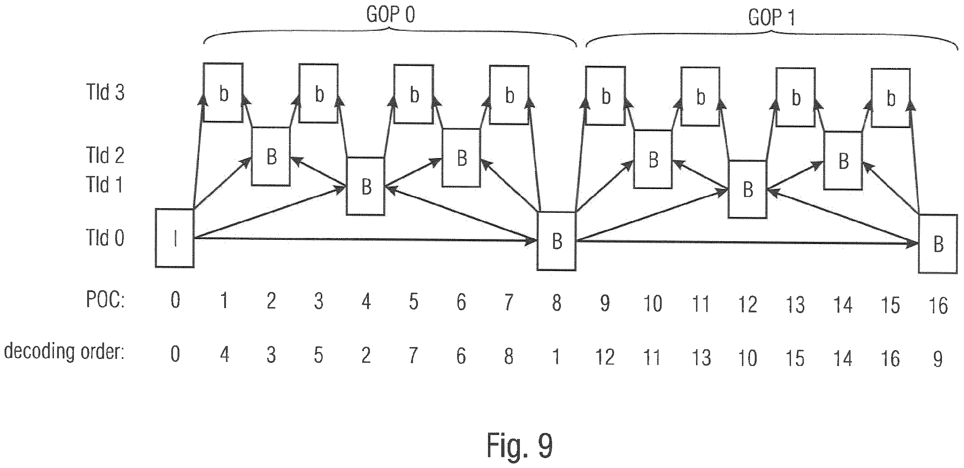

Fig. 9 shows an example of series of pictures numbered 0 to 16, which include two GOPs, GOP0 and GOP1. Each GOP includes eight pictures. In the video, the pictures are arranged in the order from 0 to 16 (POC (picture order count)). In addition, a temporal signal prediction flow is shown in Fig. 9. As can be seen in Fig. 9 pictures are not placed in a one row, but rather distributed across multiple rows. This presentation is chosen to highlight the hierarchical dependencies between pictures and their association with temporal levels (Tlds). With respect to the hierarchy, pictures of the same temporal layer within a GOP, except pictures of temporal level 0 (Tid0), do not depend on each other. So, depending on temporal level, some pictures can be processed in parallel. For example, pictures with POC 1, 3, 5, 7 inside of a GOP 0 can be processed in parallel. However, some coding tools still may introduce dependencies between pictures.

The theoretical limit for the acceleration through GOP-level frame parallel coding is determined by the GOP-size and processing time for a single picture. Due to the hierarchical structure, the larger the GOP-size the more temporal levels are available and hence, the more CPU-cores can be utilized. Dependent on the temporal layer, processing time for a single picture can have significant variations. In a tested encoder configuration, temporal level-0 pictures showed about 30-50% of total encoding time in sequential mode. Due to the fact, that the lowest temporal level pictures can only be processed sequentially, the rest of the processing time should be optimally distributed over the remaining pictures processed in parallel. So, the temporal level non-zero pictures of one GOP should be processed as fast as or even faster than the temporal level zero picture in the following GOP.

For an optimal parallel processing, a particular scheduling algorithm with prioritization of temporal level-zero pictures was implemented. A brief description of the algorithm is given below. An example of the encoding process utilizes two picture lists: Input-List and Processing-List. Pictures are coming in in encoding (decoding) order. All incoming pictures are put into Input-List. The algorithm goes through Input-List, taking pictures from Input-List in a particular processing order and puts them into Processing-List. Then the pictures from Processing-List are submitted to the multi-threaded framework in a First-In-First-Out (FIFO) order.

The algorithm is:

1. Load GOP into Input-List;
2. Determine the highest picture temporal level of all pictures in Input-List;
3. Go through pictures of Input-List temporal layer-wise upwards, beginning with the lowest temporal level (temporal level 0), searching for a temporal level 0 picture and put it into Processing-List, if picture has no temporal dependencies to other pictures from Input-List;
4. Go through pictures of Input-List temporal layer-wise downwards, beginning with the highest available temporal level, searching for the next picture that has no temporal dependencies to other pictures from Input-List and put it into Processing-List;
5. Remove all found pictures from the Input-List;
6. Submit pictures from Processing-List to a processing worker-thread with respect to FIFO order.

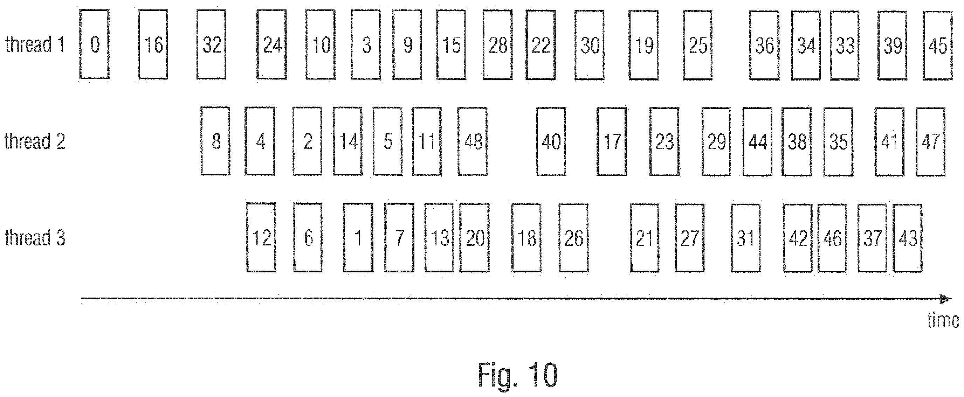

Fig. 10 shows the result for the algorithm assuming a larger series of pictures starting with the pictures shown in Fig. 9 and with three threads Thread1, Thread2, and Thread3. In Fig. 9, as it was mentioned before, due to coding dependencies, the first two temporal level zero pictures with POC 0 and POC 16 are processed sequentially. During this time, Thread2 and Threads are idle. So, the computational power is not fully exploited. Typically, the random access bitstream contains more than one intra-period GOP, a group of pictures starting with an intra picture (I-Slice). Moreover, a successive intra-period GOP has no dependencies to the previous intra-period GOP and so, allowing a random access point.

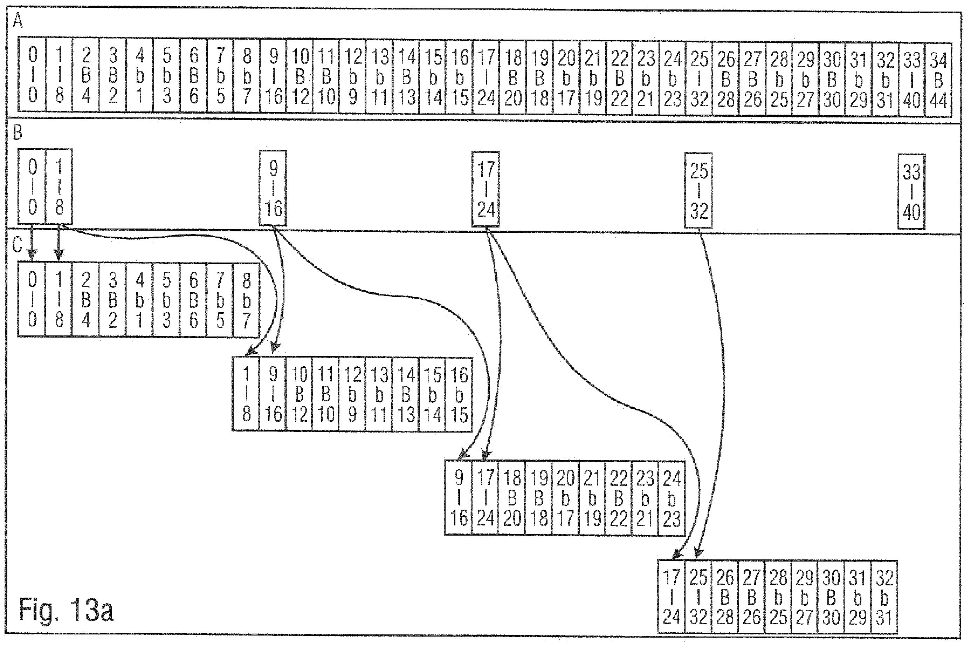

In another embodiment, when encoding more than one intra-period GOP with multiple random access points, the temporal-level zero pictures including the intra picture (I-Slices) can be processed parallel to temporal level zero pictures of other intra-period GOP. For example, in Figure 13a explained below, pictures 0, 16, 24 as well as pictures 8, 12, 20 can be processed in parallel. Through this, the threads may be less idle, and so, better system workload may be achieved.

In addition to parallelization in processing pictures, coded bitstreams may be reused. Originally with the intention to introduce helpful debugging capabilities, a decoder may be embedded into the encoder. Generally, a decoder is a magnitude faster with decoding a picture than it takes an encoder to encode this picture. In a debugging case, a faulty bit-stream is in most of the cases available. Beside the targeted debugging option, the decoder may be a very useful feature in other applications. The decoder parses a bit-stream up to some parameterized picture and reconstructs the pictures, all symbols and reconstructed data are copied to the encoder, the encoder does not perform a mode decision but writes the bit-stream. When the decoder stops decoding, the encoder may take over and continue using the common encoding process.

The information concerning a picture, which is derived by decoding the picture and which is supplied to the encoder to permit the encoder to encode non-RAP-pictures or to resume encoding may include the following. This information may include all information available for a decoded picture. This information includes reconstructed samples, decoded symbols, including temporal prediction information, (like motion vectors, reference picture indices, motion vector predictor indices), intra prediction information (like intra prediction modes, internal statistics of the prediction chain), mode information (like skip, intra, inter), and pre- and post-processing filter parameters. The information may also incorporate intermediate data (e.g. residual signals, statistical information, partitioning statistics) generated by the decoder during the decoding or filtering process. The encoder might require additional evaluation of the information received from the decoder in order to derive the information, that might be used for encoder optimization, to achieve deterministic behavior or to generate bit-equal bitstreams compared to an encoder only solution.

Embodiments relate to a parallel encoding of GOPs separated by I pictures (I slices). Video streams used in broadcast, streaming, etc. are equipped with random access points (RAP) that allow video decoders to tune into the video at predefined entry points. These RAPs can be used to fast forward or fast backward videos. A common approach to speed up the encoding of an entire video is to split it into chunks that can be encoded individually, usually located between these random access points. RAP-pictures can be encoded and decoded without reference to any other picture. In contrast thereto, non-RAP-pictures can generally not be encoded or decoded without reference to other pictures, such as the RAP-pictures preceding and following a group on non-RAP-pictures.

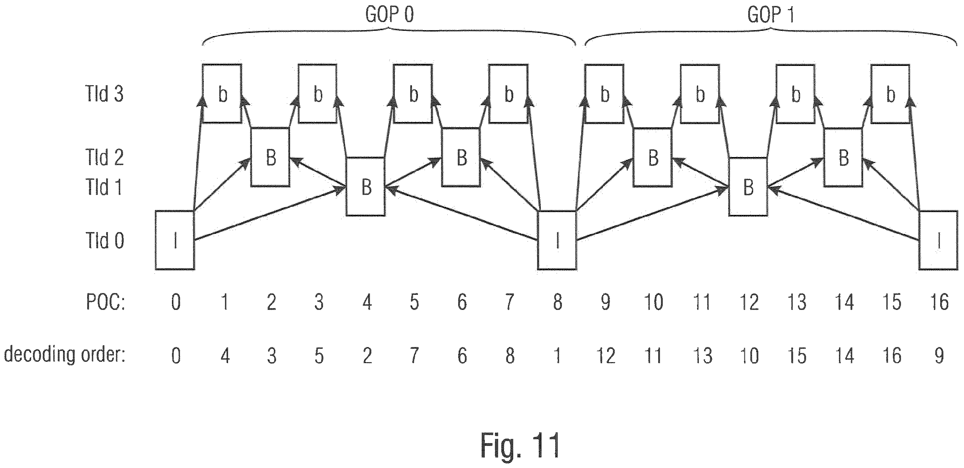

Fig. 11 shows a sequence of pictures comprising two GOPs, GOP0 and GOP1, which are separated by an RAP-picture (I picture in Fig. 11). When hierarchical coding is used as shown in Figure 11, a chunk starts with a RAP and incorporates at least a second RAP required to properly encode trailing pictures, succeeding the latter RAP in decoding order, but preceding it in display order. Because the encoding of pictures containing I-Slices, typically used for RAPs, can be very time consuming, time saving especially on I-Slices are very welcome. However, the method of parallel encoding RAP-periods has the disadvantage, that most RAP points are encoded twice, once as trailing RAP for a particular RAP-period, as well as leading RAP in the succeeding RAP-period.

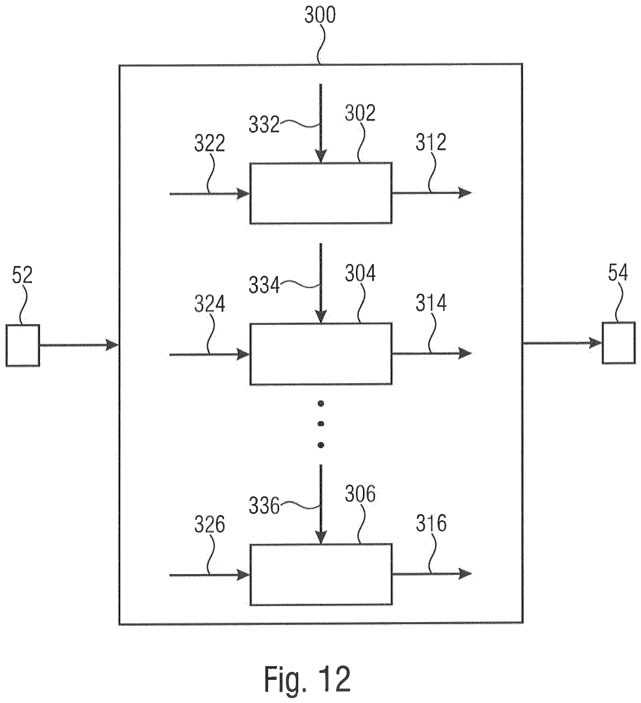

Embodiments permit avoiding such redundancy. As shown in Fig. 12, a video encoder 300 receives a sequence of pictures 52, such as those shown in Fig. 11, at an input thereof and outputs an encoded data stream 54 generated from the sequence of pictures. The video encoder 300 comprises different encoding units 302, 304 and 306. As shown by the dots in Fig. 12, a different number of encoding units may be provided. The encoding units 302, 304, 306 provide data sub-streams 312, 314, 316 corresponding to sub-series of pictures 322, 324, 326 of the sequence of pictures. Each of the sub-series includes at least one RAP-picture and the non-RAP-pictures between the one RAP-picture and the preceding RAP-pictures. The first sub-series of the sequence may include two RAP-pictures, i.e., both RAP-pictures adjoining the non-RAP-pictures.

The encoding units 302, 304, 306 encode the non-RAP-pictures of the respective sub-series of pictures. However, the encoding units 302, 304, 306 do not encode both RAP-pictures adjoining the non-RAP-pictures. Rather, in embodiments the encoding units 302, 304, 306 encode one of these RAP-pictures only or no RAP-picture at all. The encoding units may be formed by separate threads.

Rather, the encoding units 302, 304, 306 are configured to encode the non-RAP-pictures of a sub-series of pictures using information concerning at least one (or both) of the two RAP-pictures adjoining the non-RAP-pictures, which is obtained by decoding an encoded version of this RAP-picture, which has been encoded by another encoding unit. The encoding units may receive the information or may receive the version encoded by the other encoding unit (and may decode this version by an embedded encoder). This is indicated in Fig. 12 by arrows 332, 334 and 336.

According to embodiments, the encoding units receive the encoded picture from the other encoder and decode the picture by an embedded decoder to obtain the necessary information. In other embodiments, a separate decoder may be provided from which the encoding units receive the necessary information.

Fig. 13a shows in part A thereof of data-stream generated by encoding pictures 1 to 44. Pictures 1 to 16 may correspond to pictures 0 to 16 shown in Fig. 11. In Fig. 13a, the first line shows the coding order of the pictures, the second line shows the picture type (defining the hierarchy shown in Fig. 11), and the third line shows the picture number, which corresponds to the decoding order. Part B of Fig. 13a represents those pictures encoded by a first encoding unit. In the embodiment shown, the first encoding unit is an encoding unit dedicated to encode all RAP-pictures of the series of pictures. Part C of Fig. 13a is representative of the encoding units, in this case four encoding units.

As shown in Fig. 13a, each encoding unit receives the encoded version of the RAP-pictures form the dedicated first encoding unit. Each encoding unit may include an embedded decoder to obtain the necessary information from the encoded versions of the RAP-pictures. Alternatively, the video encoder may comprise an embedded decoder separate from the encoding units, which provides the necessary information to the encoding units. Accordingly, in the embodiment of Fig. 13a, each encoding unit, which is encoding non-RAP-pictures does not encode and RAP-picture.

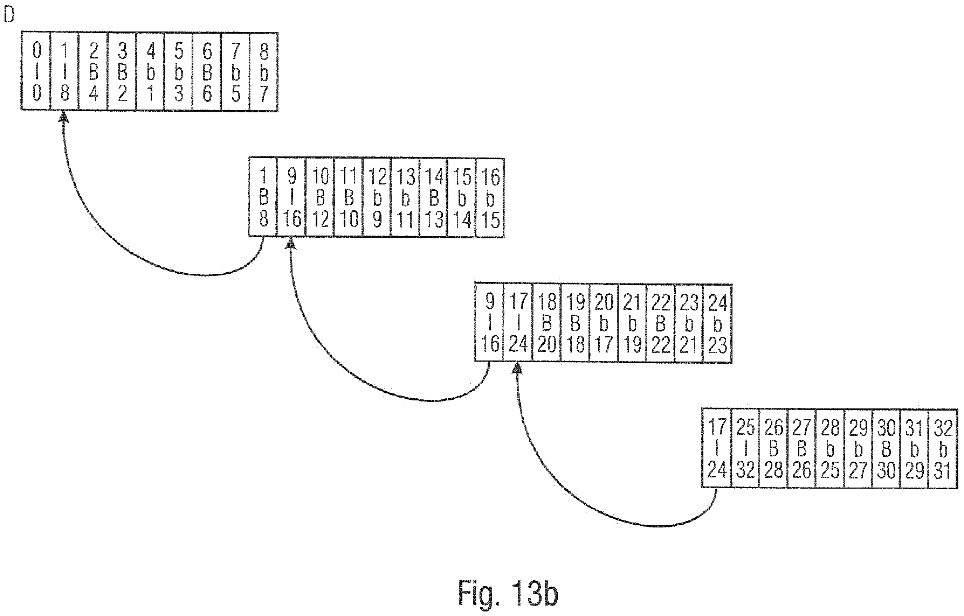

According to the embodiment of Fig. 13b, each encoding unit encodes one RAP-picture and provides the coded RAP-picture to a preceding encoding unit, except for the encoding unit encoding the non-RAP-pictures of the first sub-series (the leftmost in Fig 13b), which does not have a preceding encoding unit. The respective preceding encoding unit is the encoding unit providing a data sub-stream corresponding to a preceding sub-series of pictures. Thus, in the embodiment of Fig. 13b each encoding unit encodes one RAP-picture only. The encoding unit providing the data sub-stream corresponding to the last sub-series of pictures may encode both RAP-pictures since there is no following encoding unit from which the encoded version may be obtained.

Thus, in such embodiments, none of the RAP-pictures is encoded twice and, therefore, the overhead involved in such redundancy can be avoided.

Thus, in the embodiment of Fig. 13a, while encoding a chunk of a video, the encoding process of RAPs may be skipped. The skipped pictures are replaced by pictures, decoded by an embedded decoder. The RAP points have been encoded by another encoder in advance. In the embodiment of Fig. 13b, while encoding a chunk of a video, the encoding process of RAPs is skipped for all but the first RAP in the chunk. The skipped pictures are replaced by pictures, decoded by an embedded decoder. The RAP points required for decoding are gathered from parallel processed chunks of other encoders.

Error Robust Encoder

In embodiments, a decoder embedded in a video encoder may also be used for error robust encoding, especially if the encoder does not operate consequently deterministic.

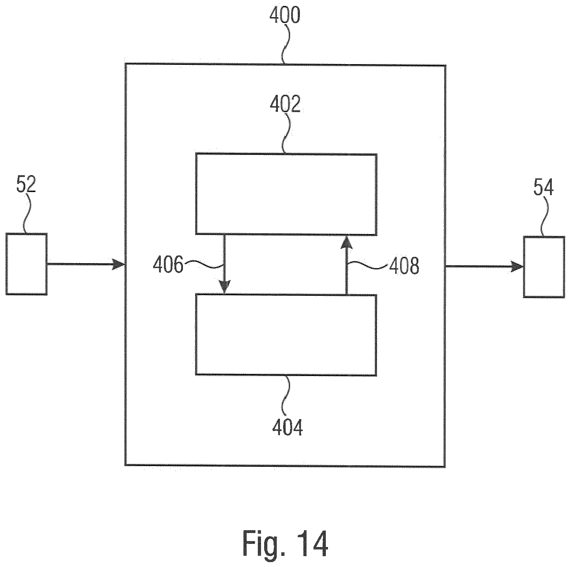

Fig. 14 shows a schematic view of a video encoder 400 receiving a series of pictures 52 of a video at an input and outputting a data stream 54 generated by encoding the pictures 52. The video encoder 400 comprises an encoding unit 402 and a decoding unit 502. The decoding unit 404 receives the encoded pictures from the encoding unit 402 as indicated by arrow 406. The decoding unit decodes the encoded pictures and provides the information obtained by decoding the pictures to the encoding unit, arrow 408. The video encoder 400 is configured to, upon an interruption of an encoding process of the encoding unit at a specific picture of the series of pictures, provide the encoding unit with the resume information from the decoding unit to resume encoding directly at the specific picture without having to encode the pictures preceding the specific picture again. The interruption may be due to a failure, for example.

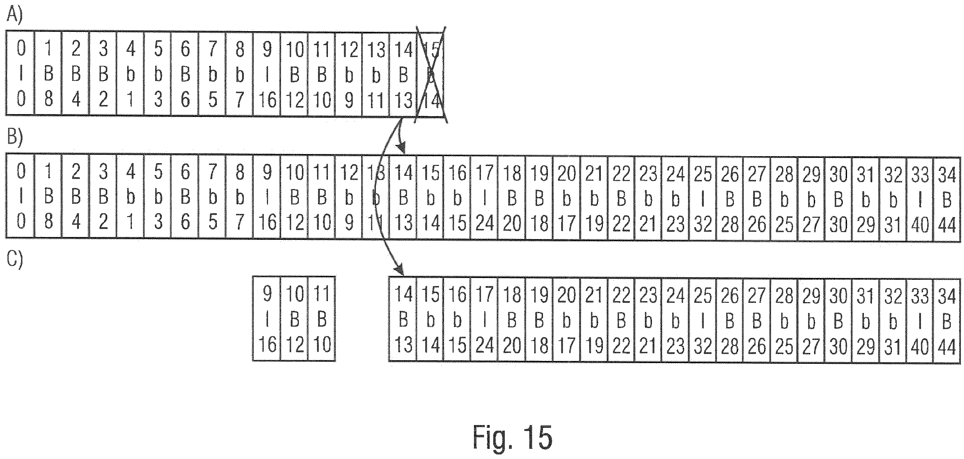

Fig. 15 shows in part A) thereof coding sequence of pictures, wherein encoding is interrupted at a picture 14. This is indicated by the cross in Fig. 15. Part B) of Fig. 15 shows the full sequence of decoded pictures after resuming encoding after the interruption.

When the interruption takes place, the decoder is in a position to provide the encoding unit with the information necessary to resume encoding directly at the image at which the interruption took place. Then the resulting data stream may be formed by combining the sub-stream encoded before the interruption and the sub-stream obtained upon resuming encoding after the interruption. Thus, the encoder is restarted after a termination caused by a potential fault. The bit-stream, written so far, that was generated in the faulty run is used with the embedded decoder to fast forward to the point of error, where the encoder continues the encoding process. Accordingly, the encoder need not encode the preceding pictures or at least the preceding pictures up to the preceding RAP-picture again.

In another embodiment, when using the embedded decoder to fast forward to the point of error, the decoder skips major parts of the parsing and reconstruction process for pictures that are not necessary for reference. This includes entire intra-periods, that precedes the erroneous intra-period, as well as non-reference-pictures, or pictures that are not required for reference within the erroneous intra-period. This is shown in part C) of Fig. 15.

Accordingly, embodiments of video encoders described herein may be adapted in order to deal with multiple input bit-streams as well as with the potential misleading picture-POCs of the decoded RAPs.

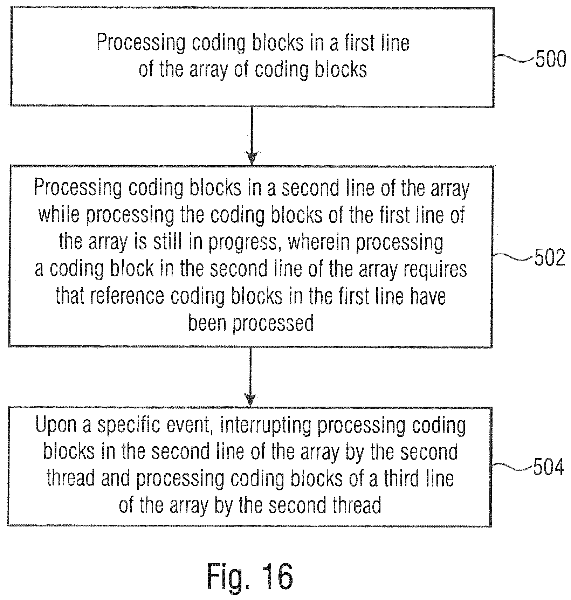

Fig. 16 is a flow chart of a method of encoding or decoding a data stream into pictures of a video, the picture being partitioned into an array of coding blocks. At 500, coding blocks in a first line of the array of coding blocks are processed by a first thread. At 502, coding blocks in a second line of the array are processed by a second thread while processing the coding blocks of the first line of the array is still in progress (in parallel), wherein processing a coding block in the second line of the array requires that reference coding blocks in the first line have been processed. At 504, upon a specific event, processing of coding blocks in the second line of the array by the second thread is interrupted and coding blocks of a third line of the array are processed by the second thread.

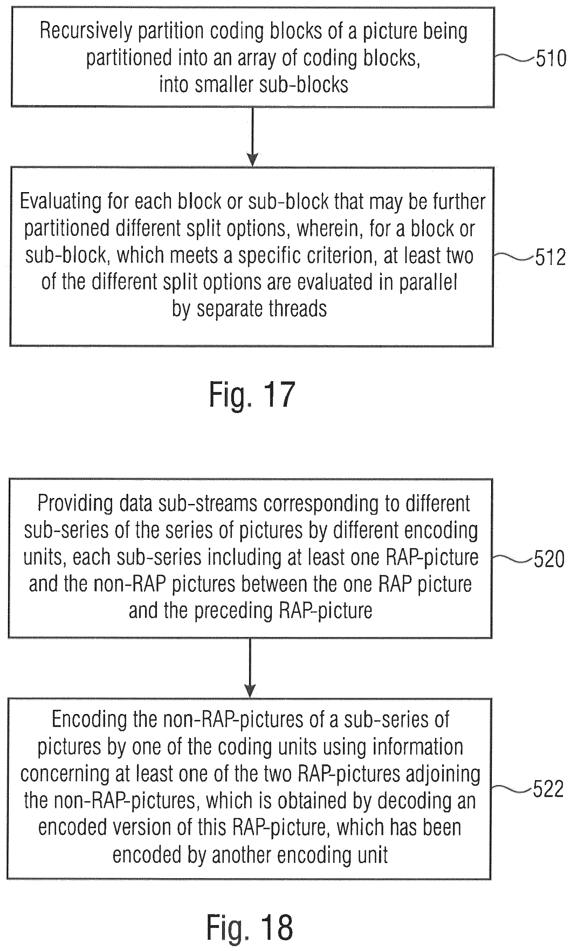

Fig. 17 is a flow chart of encoding pictures of a video into a data stream. At 510, coding blocks of a picture being partitioned into an array of coding blocks are recursively partitioned into smaller sub-blocks. At 520, for each block or sub-block that may be further partitioned different split options are evaluated, wherein, for a block or sub-block, which meets a specific criterion, at least two of the different split options are evaluated in parallel by separate threads

Fig. 18 is a flow chart of a method for encoding a series of pictures of a video into a data stream. The series of pictures comprises pictures representing random access points, RAP-pictures, and non-random access point pictures, non-RAP-pictures. In order to encode non-RAP-pictures between two RAP-pictures, information concerning the two RAP-pictures is necessary. At 520, data sub-streams corresponding to different sub-series of the series of pictures are provided by different encoding units, each sub-series including at least one RAP-picture and the non-RAP pictures between the one RAP picture and the preceding RAP-picture. At 522, the non-RAP-pictures of a sub-series of pictures are encoded by one of the encoding units using information concerning at least one of the two RAP-pictures adjoining the non-RAP-pictures, which is obtained by decoding an encoded version of this RAP-picture, which has been encoded by another encoding unit.

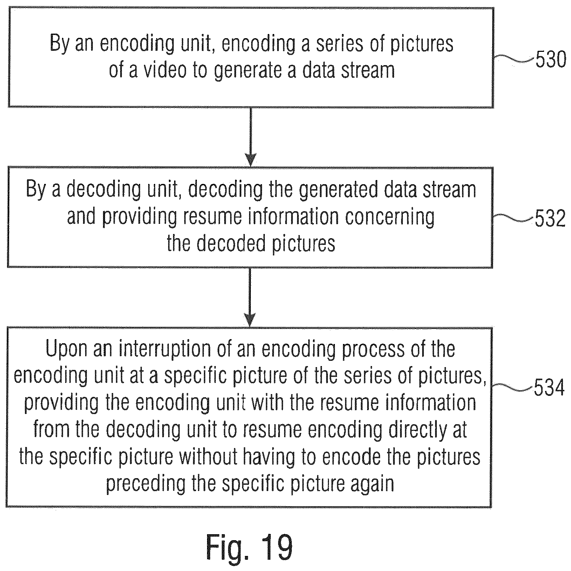

Fig. 19 is a flow chart of a method of encoding a series of pictures of a video. At 530, a series of pictures of a video is encoded by an encoding unit to generate a data stream. At 532, the generated data stream is decoded by a decoding unit and resume information concerning the decoded pictures are provided. At 534, upon an interruption of an encoding process of the encoding unit at a specific picture of the series of pictures, the encoding unit is provided with the resume information from the decoding unit to resume encoding directly at the specific picture without having to encode the pictures preceding the specific picture again.

Although some aspects have been described in the context of an apparatus, it is clear that these aspects also represent a description of the corresponding method, where a block or device corresponds to a feature of a method or a feature of a method step. Analogously, aspects described in the context of a method also represent a description of a corresponding feature or functionality of a corresponding apparatus. Some or all of the methods may be executed by (or using) a hardware apparatus, like for example, a microprocessor, a programmable computer or an electronic circuit. In embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to implement the video encoders and decoders described herein and/or to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to implement the devices described herein and/or to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] ISO/IEC, ITU-T. High efficiency video coding. ITU-T Recommendation H.265 | ISO/IEC 23008 10 (HEVC), edition 1, 2013; edition 2, 2014.

[2] JEM reference software, https://jvet.hhi.fraunhofer.de/svn/svn_HMJEMSoftware/.

[3] J. Chen, E. Alshina, G. J. Sullivan, J.-R. Ohm, J. Boyce. Algorithm description of Joint Exploration Test Model 7 (JEM7), JVET, doc. JVET-G1001, August 2017.

[4] "JVET group," [Online]. Available: http://phenix.it-sudparis.eu/jvet/.

[5] X. Li, H.-C. Chuang, J. Chen, M. Karczewicz, L. Zhang, X. Zhao, A. Said, Multi-Type-Tree, JVET, doc. JVET-D0117, Oct. 2016.

[6] F. Le L6annec, T. Poirier, F. Urban, Asymmetric Coding Units in QTBT, JVET, doc. JVET-D0064, Oct. 2016.

**Claims**

1. Video encoder (50) for encoding pictures (52) of a video into a data stream, the picture being partitioned into an array of coding blocks, wherein the video encoder (50) is configured to:

   by a first thread, process (500) coding blocks in a first line of the array of coding blocks;
   by a second thread, process (502) coding blocks in a second line of the array while processing the coding blocks of the first line of the array is still in progress, wherein processing a coding block in the second line of the array requires that reference coding blocks in the first line have been processed;
   **characterized in that** the video encoder is configured to
   upon a specific event, interrupt (504) processing coding blocks in the second line of the array by the second thread and process coding blocks of a third line of the array by the second thread, wherein

   a) the specific event is that the first thread did not yet finish processing the reference coding blocks (122) in the first line required for the second thread to process a next coding block (124) in the second line, or
   b) the specific event is that processing the second line reaches a specific coding block (124) in the second line, the specific coding block (124) representing a line switch barrier (134), and that the second line is the last line currently processed by one of the threads of the video encoder (50), wherein upon reaching the line switch barrier (134), the second thread jumps to the first coding block (136) of the third line, which is the next line following the second line, to process the first coding block (136) of the third line.

2. Video encoder of claim 1, wherein b) is fulfilled and wherein the coding blocks are grouped into tiles and wherein the specific coding block (124) is not at a tile border.

3. Video decoder (70) for decoding a data stream (74) into pictures (72) of a video, the picture being partitioned into an array of coding blocks, wherein the video decoder (70) is configured to:

   by a first thread, process (500) coding blocks in a first line of the array of coding blocks;
   by a second thread, process (502) coding blocks in a second line of the array while processing the coding blocks of the first line of the array is still in progress, wherein processing a coding block in the second line of the array requires that reference coding blocks in the first line have been processed;
   **characterized in that** the video decoder (70) is configured to
   upon a specific event, interrupt (504) processing of coding blocks in the second line of the array by the second thread and process coding blocks of a third line of the array by the second thread, wherein

   a) the specific event is that the first thread did not yet finish processing the reference coding blocks (122) in the first line required for the second thread to process a next coding block (124) in the second line, or
   b) the specific event is that processing the second line reaches a specific coding block (124) in the second line, the specific coding block (124) representing a line switch barrier (134), and that the second line is the last line currently processed by one of the threads of the video decoder (70), wherein upon reaching the line switch barrier (134), the second thread jumps to the first coding block (136) of the third line, which is the next line following the second line, to process the first coding block (136) of the third line.

4. Video decoder of claim 3, wherein b) is fulfilled and wherein the coding blocks are grouped into tiles and wherein the specific coding block (124) is not at a tile border.

5. Method of encoding pictures (52) of a video into a data stream, the picture being partitioned into an array of coding blocks, the method comprising:

by a first thread, processing (500) coding blocks in a first line of the array of coding blocks;

by a second thread, processing (502) coding blocks in a second line of the array while processing the coding blocks of the first line of the array is still in progress, wherein processing a coding block in the second line of the array requires that reference coding blocks in the first line have been processed;

**characterized in that** the method comprises

upon a specific event, interrupting (504) processing coding blocks in the second line of the array by the second thread and processing coding blocks of a third line of the array by the second thread, wherein

a) the specific event is that the first thread did not yet finish processing the reference coding blocks (122) in the first line required for the second thread to process a next coding block (124) in the second line, or

b) the specific event is that processing the second line reaches a specific coding block (124) in the second line, the specific coding block (124) representing a line switch barrier (134), and that the second line is the last line currently processed by one of the threads, wherein upon reaching the line switch barrier (134), the second thread jumps to the first coding block (136) of the third line, which is the next line following the second line, to process the first coding block (136) of the third line.

6. Method of claim 5, wherein b) is fulfilled and wherein the coding blocks are grouped into tiles and wherein the specific coding block (124) is not at a tile border.

7. Method of decoding a data stream (74) into pictures (72) of a video, the picture being partitioned into an array of coding blocks, the method comprising:

by a first thread, processing (500) coding blocks in a first line of the array of coding blocks;

by a second thread, processing (502) coding blocks in a second line of the array while processing the coding blocks of the first line of the array is still in progress, wherein processing a coding block in the second line of the array requires that reference coding blocks in the first line have been processed;

**characterized in that** the method comprises

upon a specific event, interrupting (504) processing of coding blocks in the second line of the array by the second thread and processing coding blocks of a third line of the array by the second thread, wherein

a) the specific event is that the first thread did not yet finish processing the reference coding blocks (122) in the first line required for the second thread to process a next coding block (124) in the second line, or

b) the specific event is that processing the second line reaches a specific coding block (124) in the second line, the specific coding block (124) representing a line switch barrier (134), and that the second line is the last line currently processed by one of the threads, wherein upon reaching the line switch barrier (134), the second thread jumps to the first coding block (136) of the third line, which is the next line following the second line, to process the first coding block (136) of the third line.

8. Method of claim 7, wherein b) is fulfilled and wherein the coding blocks are grouped into tiles and wherein the specific coding block is not at a tile border.

9. Computer program having a program code for performing, when running on a computer, a method according to any of claims 5 to 8.

**Patentansprüche**

1. Video-Codiereinrichtung (50) zum Codieren von Bildern (52) eines Videos in einen Datenstrom, wobei das Bild in ein Array von Codierblöcken unterteilt ist, wobei die Video-Codiereinrichtung (50) konfiguriert ist, Folgendes zu tun:

durch einen ersten Thread, Verarbeiten (500) der Codierblöcke in einer ersten Linie des Arrays von Codierblöcken;

durch einen zweiten Thread, Verarbeiten (502) der Codierblöcke in einer zweiten Linie des Arrays, während das Verarbeiten der Codierblöcke der ersten Linie des Arrays noch im Gange ist, wobei das Verarbeiten eines Codierblocks in der zweiten Linie des Arrays erfordert, dass Referenzcodierblöcke in der ersten Linie verarbeitet worden sind;

**dadurch gekennzeichnet, dass** die Video-Codiereinrichtung konfiguriert ist, Folgendes zu tun:

bei einem spezifischen Ereignis, Unterbrechen (504) des Verarbeitens der Codierblöcke in der zweiten Linie des Arrays durch den zweiten Thread und Verarbeiten der Codierblöcke einer dritten Linie des Arrays durch den zweiten Thread, wobei

a) das spezifische Ereignis darin besteht, dass der erste Thread das Verarbeiten der Referenzcodierblöcke (122) in der ersten Linie noch nicht abgeschlossen hat, das notwendig ist, damit der zweite Thread einen nächsten Codierblock (124) in der zweiten Linie verarbeitet, oder

b) das spezifische Ereignis darin besteht, dass das Verarbeiten der zweiten Linie einen spezifischen Codierblock (124) in der zweiten Linie erreicht, wobei der spezifische Codierblock (124) eine Linienumschaltgrenze (134) darstellt, und dass die zweite Linie die letzte Linie ist, die momentan durch einen der Threads der Video-Codiereinrichtung (50) verarbeitet wird, wobei bei Erreichen der Linienumschaltgrenze (134) der zweite Thread zu dem ersten Codierblock (136) der dritten Linie springt, die die nächste Linie ist, die auf die zweite Linie folgt, um den ersten Codierblock (136) der dritten Linie zu verarbeiten.

2. Video-Codiereinrichtung gemäß Anspruch 1, bei der b) erfüllt ist und wobei die Codierblöcke in Kacheln gruppiert sind und wobei der spezifische Codierblock (124) sich nicht an einer Kachelgrenze befindet.

3. Video-Decodiereinrichtung (70) zum Decodieren eines Datenstroms (74) in Bilder (72) eines Videos, wobei das Bild in ein Array von Codierblöcken unterteilt ist, wobei die Video-Decodiereinrichtung (70) konfiguriert ist, Folgendes zu tun:

durch einen ersten Thread, Verarbeiten (500) der Codierblöcke in einer ersten Linie des Arrays von Codierblöcken;

durch einen zweiten Thread, Verarbeiten (502) der Codierblöcke in einer zweiten Linie des Arrays, während das Verarbeiten der Codierblöcke der ersten Linie des Arrays noch im Gange ist, wobei das Verarbeiten eines Codierblocks in der zweiten Linie des Arrays erfordert, dass Referenzcodierblöcke in der ersten Linie verarbeitet worden sind;

**dadurch gekennzeichnet, dass** die Video-Decodiereinrichtung (70) konfiguriert ist, Folgendes zu tun:

bei einem spezifischen Ereignis, Unterbrechen (504) des Verarbeitens der Codierblöcke in der zweiten Linie des Arrays durch den zweiten Thread und Verarbeiten der Codierblöcke einer dritten Linie des Arrays durch den zweiten Thread, wobei

a) das spezifische Ereignis darin besteht, dass der erste Thread das Verarbeiten der Referenzcodierblöcke (122) in der ersten Linie noch nicht abgeschlossen hat, das notwendig ist, damit der zweite Thread einen nächsten Codierblock (124) in der zweiten Linie verarbeitet, oder

b) das spezifische Ereignis darin besteht, dass das Verarbeiten der zweiten Linie einen spezifischen Codierblock (124) in der zweiten Linie erreicht, wobei der spezifische Codierblock (124) eine Linienumschaltgrenze (134) darstellt, und dass die zweite Linie die letzte Linie ist, die momentan durch einen der Threads der Video-Decodiereinrichtung (70) verarbeitet wird, wobei bei Erreichen der Linienumschaltgrenze (134) der zweite Thread zu dem ersten Codierblock (136) der dritten Linie springt, die die nächste Linie ist, die auf die zweite Linie folgt, um den ersten Codierblock (136) der dritten Linie zu verarbeiten.

4. Video-Decodiereinrichtung gemäß Anspruch 3, bei der b) erfüllt ist und wobei die Codierblöcke in Kacheln gruppiert sind und wobei der spezifische Codierblock (124) sich nicht an einer Kachelgrenze befindet.

5. Verfahren zum Codieren von Bildern (52) eines Videos in einen Datenstrom, wobei das Bild in ein Array von Codierblöcken unterteilt ist, wobei das Verfahren folgende Schritte aufweist:

durch einen ersten Thread, Verarbeiten (500) von Codierblöcken in einer ersten Linie des Arrays von Codierblöcken;

durch einen zweiten Thread, Verarbeiten (502) von Codierblöcken in einer zweiten Linie des Arrays, während das Verarbeiten der Codierblöcke der ersten Linie des Arrays noch im Gange ist, wobei das Verarbeiten eines Codierblocks in der zweiten Linie des Arrays erfordert, dass Referenzcodierblöcke in der ersten Linie verarbeitet worden sind;

**dadurch gekennzeichnet, dass** das Verfahren folgende Schritte aufweist:

bei einem spezifischen Ereignis, Unterbrechen (504) des Verarbeitens der Codierblöcke in der zweiten Linie des Arrays durch den zweiten Thread und Verarbeiten der Codierblöcke einer dritten Linie des Arrays durch den zweiten Thread, wobei

a) das spezifische Ereignis darin besteht, dass der erste Thread das Verarbeiten der Referenzcodierblöcke (122) in der ersten Linie noch nicht abgeschlossen hat, das notwendig ist, damit der zweite Thread einen nächsten Codierblock (124) in der zweiten Linie verarbeitet, oder

b) das spezifische Ereignis darin besteht, dass das Verarbeiten der zweiten Linie einen spezifischen Codierblock (124) in der zweiten Linie erreicht, wobei der spezifische Codierblock (124) eine Linienumschaltgrenze (134) darstellt, und dass die zweite Linie die letzte Linie ist, die momentan durch einen der Threads verarbeitet wird, wobei bei Erreichen der Linienumschaltgrenze (134) der zweite Thread zu dem ersten Codierblock (136) der dritten Linie springt, die die nächste Linie ist, die auf die zweite Linie folgt, um den ersten Codierblock (136) der dritten Linie zu verarbeiten.

6. Verfahren gemäß Anspruch 5, bei dem b) erfüllt ist und wobei die Codierblöcke in Kacheln gruppiert sind und wobei der spezifische Codierblock (124) sich nicht an einer Kachelgrenze befindet.

7. Verfahren zum Decodieren eines Datenstroms (74) in Bilder (72) eines Videos, wobei das Bild in ein Array von Codierblöcken unterteilt ist, wobei das Verfahren folgende Schritte aufweist:

durch einen ersten Thread, Verarbeiten (500) von Codierblöcken in einer ersten Linie des Arrays von Codierblöcken;

durch einen zweiten Thread, Verarbeiten (502) von Codierblöcken in einer zweiten Linie des Arrays, während das Verarbeiten der Codierblöcke der ersten Linie des Arrays noch im Gange ist, wobei das Verarbeiten eines Codierblocks in der zweiten Linie des Arrays erfordert, dass Referenzcodierblöcke in der ersten Linie verarbeitet worden sind;

**dadurch gekennzeichnet, dass** das Verfahren folgende Schritte aufweist:

bei einem spezifischen Ereignis, Unterbrechen (504) des Verarbeitens von Codierblöcken in der zweiten Linie des Arrays durch den zweiten Thread und Verarbeiten von Codierblöcken einer dritten Linie des Arrays durch den zweiten Thread, wobei

a) das spezifische Ereignis darin besteht, dass der erste Thread das Verarbeiten der Referenzcodierblöcke (122) in der ersten Linie noch nicht abgeschlossen hat, das notwendig ist, damit der zweite Thread einen nächsten Codierblock (124) in der zweiten Linie verarbeitet, oder

b) das spezifische Ereignis darin besteht, dass das Verarbeiten der zweiten Linie einen spezifischen Codierblock (124) in der zweiten Linie erreicht, wobei der spezifische Codierblock (124) eine Linienumschaltgrenze (134) darstellt, und dass die zweite Linie die letzte Linie ist, die momentan durch einen der Threads verarbeitet wird, wobei bei Erreichen der Linienumschaltgrenze (134) der zweite Thread zu dem ersten Codierblock (136) der dritten Linie springt, die die nächste Linie ist, die auf die zweite Linie folgt, um den ersten Codierblock (136) der dritten Linie zu verarbeiten.

8. Verfahren gemäß Anspruch 7, bei dem b) erfüllt ist und wobei die Codierblöcke in Kacheln gruppiert sind und wobei der spezifische Codierblock sich nicht an einer Kachelgrenze befindet.

9. Computerprogramm mit einem Programmcode zum Durchführen, wenn dasselbe auf einem Computer läuft, eines Verfahrens gemäß einem der Ansprüche 5 bis 8.

**Revendications**

1. Codeur vidéo (50) pour coder les images (52) d'une vidéo dans un flux de données, l'image étant partitionnée en un réseau de blocs de codage, dans lequel le codeur vidéo (50) est configuré pour :

par un premier fil, traiter (500) les blocs de codage dans une première rangée du réseau de blocs de codage ;

par un deuxième fil, traiter (502) les blocs de codage dans une deuxième rangée du réseau tandis que le traitement des blocs de codage de la première rangée du réseau est toujours en cours, dans lequel le traitement d'un bloc de codage dans la deuxième rangée du réseau requiert que les blocs de codage de référence de la première rangée aient été traités ;

**caractérisé par le fait que** le codeur vidéo est configuré pour

lors d'un événement spécifique, interrompre (504) le traitement des blocs de codage dans la deuxième rangée du réseau par le deuxième fil et traiter les blocs de codage d'une troisième rangée du réseau par le deuxième fil, où

a) l'événement spécifique est **le fait que** le premier fil n'a pas encore fini de traiter les blocs de codage de référence (122) dans la première rangée requis pour que le deuxième fil traite un bloc de codage suivant (124) dans la deuxième rangée, ou

b) l'événement spécifique est **le fait que** le traitement de la deuxième rangée atteint un bloc de codage spécifique (124) dans la deuxième rangée, le bloc de codage spécifique (124) représentant une barrière de commutation de rangée (134), et que la deuxième rangée est la dernière rangée actuellement traitée par l'un des fils du codeur vidéo (50), où, lorsque la barrière de commutation de rangée (134) est atteinte, le deuxième fil saute au premier bloc de codage (136) de la troisième rangée, qui est la rangée suivante qui suit la deuxième rangée, pour traiter le premier bloc de codage (136) de la troisième rangée.

2. Codeur vidéo selon la revendication 1, dans lequel b) est rempli et dans lequel les blocs de codage sont regroupés en tuiles et dans lequel le bloc de codage spécifique (124) ne se situe pas en bordure de tuile.

3. Décodeur vidéo (70) pour décoder un flux de données (74) en images (72) d'une vidéo, l'image étant partitionnée en un réseau de blocs de codage, dans lequel le décodeur vidéo (70) est configuré pour:

par un premier fil, traiter (500) les blocs de codage dans une première rangée du réseau de blocs de codage; par un deuxième fil, traiter (502) les blocs de codage dans une deuxième rangée du réseau tandis que le traitement des blocs de codage de la première rangée du réseau est toujours en cours, où le traitement d'un bloc de codage dans la deuxième rangée du réseau requiert que les blocs de codage de référence de la première rangée aient été traités;

**caractérisé par le fait que** le décodeur vidéo (70) est configuré pour

lors d'un événement spécifique, interrompre (504) le traitement des blocs de codage dans la deuxième rangée du réseau par le deuxième fil et traiter les blocs de codage d'une troisième rangée du réseau par le deuxième fil, où

a) l'événement spécifique est **le fait que** le premier fil n'a pas encore fini de traiter les blocs de codage de référence (122) dans la première rangée requis pour que le deuxième fil traite un bloc de codage suivant (124) dans la deuxième rangée, ou

b) l'événement spécifique est **le fait que** le traitement de la deuxième rangée atteint un bloc de codage spécifique (124) dans la deuxième rangée, le bloc de codage spécifique (124) représentant une barrière de commutation de rangée (134), et que la deuxième rangée est la dernière rangée actuellement traitée par l'un des fils du décodeur vidéo (70), où, lorsque la barrière de commutation de rangée (134) est atteinte, le deuxième fil saute au premier bloc de codage (136) de la troisième rangée, qui est la rangée suivante qui suit la deuxième rangée, pour traiter le premier bloc de codage (136) de la troisième rangée.

4. Décodeur vidéo selon la revendication 3, dans lequel b) est rempli et dans lequel les blocs de codage sont regroupés en tuiles et dans lequel le bloc de codage spécifique (124) ne se situe pas en bordure de tuile.

5. Procédé de codage d'images (52) d'une vidéo dans un flux de données, l'image étant partitionnée en un réseau de blocs de codage, le procédé comprenant le fait de:

par un premier fil, traiter (500) les blocs de codage dans une première rangée du réseau de blocs de codage; par un deuxième fil, traiter (502) les blocs de codage dans une deuxième rangée du réseau tandis que le traitement des blocs de codage de la première rangée du réseau est toujours en cours, où

le traitement d'un bloc de codage dans la deuxième rangée du réseau requiert que les blocs de codage de référence dans la première rangée aient été traités;

**caractérisé en ce que** le procédé comprend le fait de

lors d'un événement spécifique, interrompre (504) le traitement des blocs de codage dans la deuxième rangée du réseau par le deuxième fil et le traitement des blocs de codage d'une troisième rangée du réseau par le deuxième fil, où

a) l'événement spécifique est le fait que le premier fil n'a pas encore fini de traiter les blocs de codage de référence (122) dans la première rangée requis pour que le deuxième fil traite un bloc de codage suivant (124) dans la deuxième rangée, ou

b) l'événement spécifique est le fait que le traitement de la deuxième rangée atteint un bloc de codage spécifique (124) dans la deuxième rangée, le bloc de codage spécifique (124) représentant une barrière de commutation de rangée (134), et que la deuxième rangée est la dernière rangée actuellement traitée par l'un des fils, où, lorsque la barrière de commutation de rangée (134) est atteinte, le deuxième fil saute au premier bloc de codage (136) de la troisième rangée, qui est la rangée suivante qui suit la deuxième rangée, pour traiter le premier bloc de codage bloc (136) de la troisième rangée.

6. Procédé selon la revendication 5, dans lequel b) est rempli et dans lequel les blocs de codage sont regroupés en tuiles et dans lequel le bloc de codage spécifique (124) ne se situe pas en bordure de tuile.

7. Procédé de décodage d'un flux de données (74) en images (72) d'une vidéo, l'image étant partitionnée en un réseau de blocs de codage, le procédé comprenant le fait de:

par un premier fil, traiter (500) les blocs de codage dans une première rangée du réseau de blocs de codage; par un deuxième fil, traiter (502) les blocs de codage dans une deuxième rangée du réseau tandis que le traitement des blocs de codage de la première rangée du réseau est toujours en cours, où le traitement d'un bloc de codage dans la deuxième rangée du réseau requiert que les blocs de codage de référence de la première rangée aient été traités;

**caractérisé en ce que** le procédé comprend le fait de

lors d'un événement spécifique, interrompre (504) le traitement des blocs de codage dans la deuxième rangée du réseau par le deuxième fil et traiter les blocs de codage d'une troisième rangée du réseau par le deuxième fil, où

a) l'événement spécifique est le fait que le premier fil n'a pas encore fini de traiter les blocs de codage de référence (122) dans la première rangée requis pour que le deuxième fil traite un bloc de codage suivant (124) dans la deuxième rangée, ou

b) l'événement spécifique est le fait que le traitement de la deuxième rangée atteint un bloc de codage spécifique (124) dans la deuxième rangée, le bloc de codage spécifique (124) représentant une barrière de commutation de rangée (134), et que la deuxième rangée est la dernière rangée actuellement traitée par l'un des fils, où, lorsque la barrière de commutation de rangée (134) est atteinte, le deuxième fil saute au premier bloc de codage (136) de la troisième rangée, qui est la rangée suivante qui suit la deuxième rangée, pour traiter le premier bloc de codage bloc (136) de la troisième rangée.

8. Procédé selon la revendication 7, dans lequel b) est rempli et dans lequel les blocs de codage sont regroupés en tuiles et dans lequel le bloc de codage spécifique ne se situe pas en bordure de tuile.

9. Programme d'ordinateur présentant un code de programme pour réaliser, lorsqu'il est exécuté sur un ordinateur, un procédé selon l'une quelconque des revendications 5 à 8.

Fig. 1

Fig. 2

Fig. 3

CTU available for reference    CTU currently processed    CTU not available

Fig. 4

EP 3 777 168 B1

A) WPP with Inter-Process-Synchrnization

B) WPP with Lockstep Exectution

☐ CTU available for reference

▨ CTU currently processed

▨ CTU not available

Fig. 5

Fig. 6

CTU available for reference   CTU currently processed   CTU not available

blocked CTU   spare-line CTU activated

EP 3 777 168 B1

CTU available for reference    CTU currently processed    CTU not available

blocked CTU    spare-line CTU activated    line switch barrier

Fig. 7

EP 3 777 168 B1

Fig. 8

Fig. 9

EP 3 777 168 B1

Fig. 10

EP 3 777 168 B1

Fig. 11

EP 3 777 168 B1

300

332 302 312

322

52

324 334 304 314

54

326 336 306 316

Fig. 12

Fig. 13a

Fig. 13b

Fig. 14

A)

| 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| I | B | B | B | b | b | B | b | b | I | B | B | b | b | B | b |
| 0 | 8 | 4 | 2 | 1 | 3 | 6 | 5 | 7 | 16 | 12 | 10 | 9 | 11 | 13 | 14 |

B)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|---|---|---|---|---|---|---|---|---|---|---|---|---|---|
| I | B | B | B | b | b | B | b | b | I | B | B | b | b | B | b | b | I | B | B | b | b | B | b | b | I | B | B | b | b | B | b | b | I | B |
| 0 | 8 | 4 | 2 | 1 | 3 | 6 | 5 | 7 | 16 | 12 | 10 | 9 | 11 | 13 | 14 | 15 | 24 | 20 | 18 | 17 | 19 | 22 | 21 | 23 | 32 | 28 | 26 | 25 | 27 | 30 | 29 | 31 | 40 | 44 |

C)

| 9 | 10 | 11 |
|---|---|---|
| I | B | B |
| 16 | 12 | 10 |

| 14 | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| B | b | b | I | B | B | b | b | B | b | b | I | B | B | b | b | B | b | b | I | B |
| 13 | 14 | 15 | 24 | 20 | 18 | 17 | 19 | 22 | 21 | 23 | 32 | 28 | 26 | 25 | 27 | 30 | 29 | 31 | 40 | 44 |

Fig. 15

EP 3 777 168 B1

Processing coding blocks in a first line
of the array of coding blocks ⟋500

Processing coding blocks in a second line of the array
while processing the coding blocks of the first line of
the array is still in progress, wherein processing
a coding block in the second line of the array requires
that reference coding blocks in the first line have
been processed ⟋502

Upon a specific event, interrupting processing coding
blocks in the second line of the array by the second
thread and processing coding blocks of a third line
of the array by the second thread ⟋504

# Fig. 16

Recursively partition coding blocks of a picture being partitioned into an array of coding blocks, into smaller sub-blocks

510

Evaluating for each block or sub-block that may be further partitioned different split options, wherein, for a block or sub-block, which meets a specific criterion, at least two of the different split options are evaluated in parallel by separate threads

512

## Fig. 17

Providing data sub-streams corresponding to different sub-series of the series of pictures by different encoding units, each sub-series including at least one RAP-picture and the non-RAP pictures between the one RAP picture and the preceding RAP-picture

520

Encoding the non-RAP-pictures of a sub-series of pictures by one of the coding units using information concerning at least one of the two RAP-pictures adjoining the non-RAP-pictures, which is obtained by decoding an encoded version of this RAP-picture, which has been encoded by another encoding unit

522

## Fig. 18

By an encoding unit, encoding a series of pictures
of a video to generate a data stream ⌇~530

By a decoding unit, decoding the generated data stream
and providing resume information concerning
the decoded pictures ⌇~532

Upon an interruption of an encoding process of the
encoding unit at a specific picture of the series of pictures,
providing the encoding unit with the resume information
from the decoding unit to resume encoding directly at
the specific picture without having to encode the pictures
preceding the specific picture again ⌇~534

Fig. 19

Fig. 20

Fig. 21

**EP 3 777 168 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007286288 A1

### Non-patent literature cited in the description

- **J. CHEN ; E. ALSHINA ; G. J. SULLIVAN ; J.-R. OHM ; J. BOYCE.** Algorithm description of Joint Exploration Test Model 7 (JEM7). *JVET, doc. JVET-G1001,* August 2017

- **X. LI ; H.-C. CHUANG ; J. CHEN ; M. KARCZEWICZ ; L. ZHANG ; X. ZHAO ; A. SAID.** *Multi-Type-Tree, JVET, doc. JVET-D0117,* October 2016
- **F. LE L6ANNEC ; T. POIRIER ; F. URBAN.** Asymmetric Coding Units in QTBT. *JVET, doc. JVET-D0064,* October 2016